# EUROPEAN PATENT SPECIFICATION

(11) **EP 2 930 631 B1**
(45) Date of publication and mention of the grant of the patent: **11.09.2019**
(21) Application number: 15161783.4
(22) Date of filing: 30.03.2015
(51) Int. Cl.: G06F 17/21, G06F 16/957

(54) **METHOD AND APPARATUS FOR CONTENT OUTPUT**
VERFAHREN UND VORRICHTUNG ZUM STEUERN VON INHALTSAUSGABEN
PROCÉDÉ ET APPAREIL POUR VISUALISATION DE CONTENU

(30) Priority: 01.04.2014 KR 20140038449
(43) Date of publication of application: 14.10.2015
(73) Proprietor: Samsung Electronics Co., Ltd., Gyeonggi-do 443-742 (KR)
(72) Inventor: Kim, Ji Hyun, Suwon-si Gyeonggi-do 441-390 (KR); Sung, Jung Sic, Paju-si Gyeonggi-do 413-905 (KR); Lee, Chul Hwan, Seoul 137-910 (KR); Kim, Jeong Hun, Hwaseong-si Gyeonggi-do 445-739 (KR); Park, Ji Hea, Seoul 140-132 (KR); Song, Se Jun, Seoul 142-752 (KR); Lee, Yo Han, Seongnam-si Gyeonggi-do 463-812 (KR); Choi, Young Keun, Suwon-si Gyeonggi-do 443-742 (KR)
(74) Representative: HGF Limited

(56) References cited:
- US-A1- 2004 201 595

## Description

### BACKGROUND

### Field of the Disclosure

The present disclosure relates to electronic devices and more particularly to a method and apparatus for content output.

### Background of the Disclosure

With the recent development of digital technology, electronic devices available for communication and personal information processing while moving, for example, mobile communication devices, personal digital assistants (PDAs), electronic organizers, smartphones, and tablet personal computers (PCs), are released variously. Such electronic devices do not stay in their typical original areas (e.g. spatial locations) and reach a mobile convergence stage covering other terminals' areas.

Moreover, conventional electronic devices typically output a content not corresponding to the aspect ratio of a display module while displaying the content. For example, a specific content is often displayed smaller than the display area of a display module. Additionally, conventional electronic devices simply output only a stored specific content and thus their content displaying operations are monotonous.

### SUMMARY

Various respective aspects and features of the invention are defined in the appended claims. Combinations of features from the dependent claims may be combined with features of the independent claims as set out in the claims.

According to one aspect of the disclosure, a method is provided comprising: displaying a first content; detecting, by an electronic device, an output condition; and in response to the output condition, outputting, by the electronic device, a second content that that is associated with the first content.

According to another aspect of the disclosure, an electronic device is provided comprising: a memory configured to store content; and a processor configured to: display a first content; detect, by an electronic device, an output condition; and in response to the output condition, output a second content that that is associated with the first content.

Another aspect of the disclosure provides a computer program comprising instructions arranged, when executed, to implement a method in accordance with any one of the above-described aspects. A further aspect provides machine-readable storage storing such a program.

US patent application publication number 2004/201595 A1 discloses a self-orienting display that senses the characteristics of an object and automatically rotates and reformats a display image accordingly.

### BRIEF DESCRIPTION OF THE DRAWINGS

Embodiments of the invention will now be described, by way of example only, with reference to the accompanying drawings in which:
FIG. 1 is a diagram of an example of a content management system according to an embodiment of the present disclosure.
FIG. 2 is a block diagram illustrating an example of a content processing module according to an embodiment of the present disclosure.
FIG. 3 is a block diagram illustrating an example of a content generation module according to an embodiment of the present disclosure.
FIG. 4 is a block diagram illustrating an example of a content collection module according to an embodiment of the present disclosure.
FIG. 5 is a flowchart of an example of a process according to an embodiment of the present disclosure.
FIG. 6 is flowchart of an example of a process according to another embodiment of the present disclosure.
FIG. 7 is a diagram illustrating a content change output function according to an embodiment of the present disclosure.
FIG. 8 is a diagram illustrating an event application of a changed content according to an embodiment of the present disclosure.
FIG. 9 is a diagram illustrating a content change output function according to an embodiment of the present disclosure.
FIG. 10 is a diagram illustrating an event application of a content changed based on an object according to an embodiment of the present disclosure.
FIG. 11 is a diagram illustrating a first content change output function according to an embodiment of the present disclosure.
FIG. 12 is a diagram illustrating a plurality of content output functions according to an embodiment of the present disclosure.
FIG. 13 is a diagram illustrating an event application to a plurality of contents according to an embodiment of the present disclosure.
FIG. 14 is a diagram illustrating a content management depending on margin processing according to an embodiment of the present disclosure.
FIG. 15 is a diagram illustrating a situation information based content management according to an embodiment of the present disclosure.
FIG. 16 is a diagram illustrating a related content management according to an embodiment of the present disclosure.
FIG. 17 is a diagram illustrating an event application of a related content according to an embodiment of the present disclosure.
FIG. 18 is a diagram illustrating a link item based content application according to an embodiment of the present disclosure.
FIG. 19 is a diagram illustrating a location based content management according to an embodiment of the present disclosure.
FIG. 20 is a block diagram of an example of an electronic device according to another embodiment of the present disclosure.

### DETAILED DESCRIPTION

Hereinafter, the present disclosure is described with reference to the accompanying drawings. Various modifications are possible in various embodiments of the present disclosure and specific embodiments are illustrated in drawings and related detailed descriptions are listed. Thus, it is intended that the present disclosure covers the modifications and variations of this disclosure provided they come within the scope of the appended claims and their equivalents. With respect to the descriptions of the drawings, like reference numerals refer to like elements.

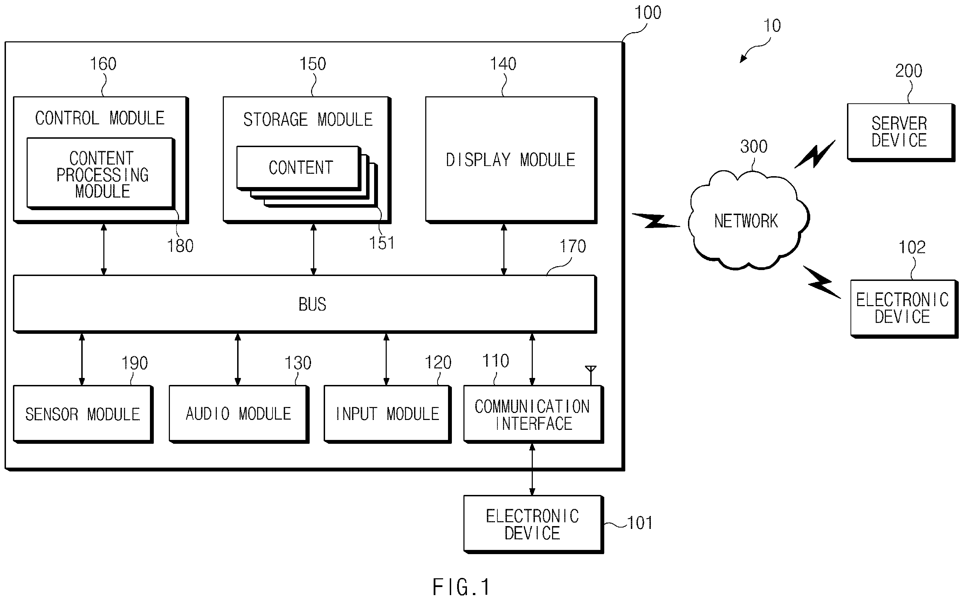

FIG. 1 is a diagram of an example of a content management system according to an embodiment of the present disclosure.

Referring to FIG. 1, a content management system 10 may include an electronic device 100, a first external electronic device 101, a second external electronic device 102, a server 200, and a network 300.

According to an embodiment, the electronic device 100 in the content management system 10 may check whether the output condition of a specific content (for example, a content stored in a storage module or a content received from the outside, hereinafter referred to as basic content) outputted or to be outputted to the display module 140 satisfies a specified condition. Once the specified condition is satisfied, the electronic device 100 may output to the display module 140 at least one of a generated content generated by extracting at least part of the content information (for example, at least one of a screen component relating to at least one object relating to content display and description information (content creation date, tag information, and content link information describing content) of a basic content, a generated content generated by changing at least part of the content information of the basic content, and a generated content generated by combining an object extracted from the content information of the basic content and another content or at least part of an object of another content. According to an embodiment, if the output condition of the basic content satisfies the specified condition, the electronic device 100 may output to the display module 140 at least one of a related content collected in relation to the content information of the basic content, a related content collected in relation to the electronic device 100 outputting the basic content, and a related content including at least part of the content information.

According to an embodiment, the above condition may include at least one of a size related condition of a margin area of a content outputted to the display module 140, an output size related condition of content, a related condition of a location for outputting content, an output color related condition of content, and a type related condition of an object in content. For example, the above condition may be a condition that a margin area disposed on the display module 140 is equal to, greater or less than a specified size while basic content is outputted. The above condition may be a condition that a size in which basic content is outputted to the display module 140 is equal to, greater or less than a specified size. The above condition may be a condition that a location at which basic content is outputted to the display module 140 is limited to a specific area (for example, an edge partial area) or is outputted to a specified location. The above condition may be a condition that when basic content is outputted to the display module 140, its color is a specific color (for example, red color, blue color, mixed color, or white color or its portion is transparent). The above condition may be a condition that the type or number of an object (for example, a background object, a specific person object, and a specific thing object) is a specified object type or number. In the description below, a condition according to the size of a margin area will be described as an example of the condition of a content management function.

According to various embodiments, in relation to a margin area, the electronic device 100 may estimate a margin area to occur by comparing the display ratio of a basic content to be outputted to the display module 140 and the aspect ratio of the display module 140 and when the estimated margin area is greater than a specific value, may output at least one of the above-mentioned generated contents and related contents. Additionally, the electronic device 100 may check a margin area of a basic content being displayed on the display module 140 (within a specified time from a time point that the basic content is outputted) and when the size of the checked margin area is greater than a specific value, may output at least one of the above-mentioned generated content and related content.

The first external electronic device 101 may establish a communication channel with the electronic device 100 through at least one of a short range communication module and a direct communication module. According to an embodiment, the first external electronic device 101 may be a wearable electronic device. According to an embodiment, the first external electronic device 101 may have the same form as the second external electronic device 102 or the electronic device 100. The first external electronic device 101 may store at least one content (for example, picture files, background screen files, image files (for example, pictures), and texts). The first external electronic device 101 may transmit at least one content to the electronic device 100 in response to the request of the electronic device 100. At this point, the first external electronic device 101 may receive search information(e.g., search query) including at least one of analysis information relating to the basic content, metadata information (or property information), situation information, and user input information, from the electronic device 100. The first external electronic device 101 may detect a content corresponding to the received search information and may transmit the detected content to the electronic device 100.

The second external electronic device 102 may establish a communication channel with the electronic device 100 through the network 300. For example, the second external electronic device 102 may establish a communication channel with the electronic device 100 through cellular communication network or WiFi communication network. Similar to the first external electronic device 101, the second external electronic device 102 may store at least one content (for example, picture files, image files, background screen files, and texts). The second external electronic device 102 may transmit at least one content to the second external electronic device 100 in response to the request of the electronic device 100. For example, the second external electronic device 102 may transmit a background screen image file to the second external electronic device 100. During this operation, the second external electronic device 102 may select a background screen file relating to at least one of property information (or metadata information) or analysis information that the electronic device 100 transmits from the background screen file to transmit the background screen file to the electronic device 100.

The server device 200 may establish a communication channel with the electronic device 100 through the network 300. The server 200 may provide a server page including at least one item (or content display item) to the electronic device 100 accessed through the network 300. The server 200 may receive at least one of property information, analysis information, situation information, and user input information, from the electronic device 100. The server 200 may collect a search result (for example, at least one web page, at least one object, and at least one item relating to search information) by inputting the received property information, analysis information, situation information, and user input information as the search information. According to an embodiment, the server 200 may provide the collected search result to the electronic device 100. According to an embodiment, the server 200 may extract at least one object from the search result and may then transmit the extracted object. The object may include at least one of an image or a picture in a webpage, and a sub object and a background object configuring an image or a picture.

The network 300 may establish a communication channel between the second external electronic device 102 and the electronic device 100. The network 300 may transmit at least one of property information, analysis information, situation information, and user input information of the electronic device 100, to the second external electronic device 102. The network 300 may transmit at least one of contents stored in the second external electronic device 102 to the electronic device 100. The network 300 may establish a communication channel between the server 200 and the electronic device 100. The server 200 provides at least one webpage and at least one object in a webpage to the electronic device 100 through the network 300.

In correspondence to a state of a basic content to be outputted or outputted to the display module 140, the electronic device 100 may output at least one of a generated content generated based on the basic content and a related content collected in relation to the content. Such the electronic device 100 may include a communication interface 110, an input module 120, an audio module 130, a display module 140, a storage module 150, a control module 160, a sensor module 190, and a bus 170.

The communication interface 110 may support a communication function of the electronic device 100. When the electronic device 100 supports a plurality of communication methods, it may include a plurality of communication modules. For example, the electronic device 100 may include a short range communication module or a direct communication module in relation to a direct communication channel establishment with the first external electronic device 101. The short range communication module or the direct communication module may include at least one among various communication modules such as a WiFi direct communication module, a Bluetooth communication module, and a Zigbee communication module. When the electronic device 100 supports a base station based communication method, the communication interface 110 may include a communication module using 3G/4G(LTE) network and a WiFi communication module supporting an Access Point (AP) based communication method. The communication interface 110 may include a location information collection module, for example, a Global Positioning System (GPS) module.

According to an embodiment, the communication interface 110 may receive at least one content corresponding to transmitted search information from at least one of the first external electronic device 101, the second external electronic device 102, and the server 200. For example, the communication interface 110 may receive an image corresponding to the search information(e.g., search query) from the first external electronic device 101. For example, the communication interface 110 may receive a picture corresponding to the search information from the second external electronic device 102. For example, the communication interface 110 may receive a webpage corresponding to the search information from the server 200. According to an embodiment, the search information may include at least one of analysis information relating to a basic content outputted or to be outputted to the display module 140, metadata information (or property information), and situation information. Additionally, the search information may include user input information collected while the basic content is outputted.

According to an embodiment, the analysis information may include information generated by analyzing the basic content. For example, the analysis information may include specific color, brightness, saturation, and object properties in content, Layer information, emotion information (for example, emotion information obtained on the basis of the analysis of a person's face in a corresponding content), and atmosphere information (for example, atmosphere information obtained through weather information, person's face information, and landscape analysis when a corresponding content is collected).

According to an embodiment, the metadata information (or property information) may include information stored in at least one field defining a basic content or information stored in an additional storage area mapping into a basic content. For example, the metadata information may include type or mechanical characteristic information of a device collecting a basic content, object information relating to objects included in a basic content, link information connected to a basic content, environment information (for example, location, weather, composition, and bird's eye view) obtained when a basic content is collected, and capturing shot mode type information when a basic content is collected.

According to an embodiment, the situation information, as situation information (for example the context in which the basic content is displayed including characteristics and/or measurements corresponding to the electronic device when the basic information is output/displayed) relating to a basic content display, may include information relating to a time point for outputting a basic content to the display module 140. For example, the situation information may include time information for outputting a basic content, location information or region information of the electronic device 100 when a basic content is outputted, and weather information when a basic content is outputted. Additionally or alternatively, the situation information may include a sensor signal that the sensor module 190 collects when a basic content is outputted and function management state information of the electronic device 100 when a basic content is outputted. Additionally, the situation information may include season information of a region where the electronic device 100 is located and advertisement information (or multimedia content) provided from a region where the electronic device 100 is located while a basic content is outputted.

According to an embodiment, the user input information may be information relating to a user input for a basic content. For example, the user input information may include specific area selection information of the display module 140, specific object selection information included in a content outputted to the display module 140, and specific gesture input information inputted while a specific content (at least one of a basic content and a content outputted to the display module 140 in relation to a basic content) is outputted. Additionally, the user input information may include a sensor signal occurring while a specific content is outputted.

According to various embodiments, the communication interface 110 may include a GPS module. The communication interface 110 may collect location information while a basic content output is requested or a basic content is outputted. The communication interface 110 may provide the collected location information to the control module 160.

The input module 120 may perform at least one of an input signal generation function or a data output function of the electronic device 100. The input module 120 may include a physical key button (for example, a home key, a side key, and a power key), a jog key, and a keypad. The input module 120 may include a virtual key pad outputted to the display module 140 as an input device. The input module 120 may generate an input signal for activating a specific device component such as the display module 140, the sensor module 190, or the communication interface 110 included in the electronic device 100, in response to a user input. According to an embodiment, the input module 120 may generate an input signal relating to power on or off of the electronic device 100 and an input signal relating to a basic content output, in response to a user input. The input module 120 may generate an input signal relating to an outputted content control or a content management in response to a user input while a content relating to a basic content is outputted. For example, when a plurality of contents are outputted to the display module 140, the input module 120 may generate an input signal for changing the location of content, dragging content, or specifying or selecting content, in response to a user input.

The audio module 130 may include a speaker or a mic relating to audio processing. In relation to this, the audio module 130 may include one or more of at least one of a speaker and a mic. For example, while audio data is included in a basic content, when the basic content is outputted, the audio module 130 may output the audio data included in the basic content. When a specific content is outputted in correspondence to a basic content state, the audio module 130 may output audio data guiding a specific content output and audio data relating to the specific content.

The display module 140 may output various screens relating to a management of the electronic device 100. For example, the display module 140 may output a lock screen or a standby screen. The display module 140 may output a specific function execution screen, for example, a sound source playback app execution screen, a video playback app execution screen, and a broadcast reception screen, in correspondence to a function execution. According to an embodiment, the display module 140 may output a basic content. The basic content may include a background screen image, a lock screen image, a standby screen image, a picture according to a gallery execution function. The basic content may include an execution image or a background image provided when a specific function (for example, a schedule function, a sound source playback function, a voice recording function, and a voice search function) is executed. According to an embodiment, the basic content may be at least one of contents 151 stored in the storage module 150.

According to various embodiments, when an output condition of a basic content to be outputted satisfies a specified condition, the display module 140 may output a basic change content (for example, a content obtained by changing at least part of a basic content or another content linked to information relating to a basic content). According to an embodiment, when an outputted basic content corresponds to a specified condition, the display module 140 may output a specific content. Herein, the specific content may include at least one of a generated content generated based on at least part of a basic content, a related content (for example, another content belonging to the same storage group as a basic content and a content collected by using search information relating to a basic content) relating to a basic content, and a related content (for example, a content provided based on a function execution relating to a basic content output situation) relating to a basic content output situation.

The storage module 150 may store a variety of information relating to a management of the electronic device 100. For example, the storage module 150 may store a specific application (app) executed in the electronic device 100 and data according to an app execution. According to an embodiment, the storage module 150 may further include a stored content 151. The stored content 151 may include a basic content. According to an embodiment, the stored content 151 may include at least one of a generated content generated based on at least part of a basic content, a related content relating to a basic content, and a related content relating to a basic content output situation. According to an embodiment, the stored content 151 may include at least one of a picture file, an image file, a text file, or a video file or an audio file. According to an embodiment, the stored content 151 may include a webpage provided from the server 200 and a specific object (for example, at least one image included in a webpage).

The sensor module 190 may collect various sensor signals relating to a movement state of the electronic device 100 or a surrounding situation of the electronic device 100. For example, the sensor module 190 may include a gyro sensor, an acceleration sensor, or an illumination sensor relating to a movement detection of the electronic device 100. The sensor module 190 may be activated or deactivated by a control of the electronic device 100. According to an embodiment, at least one sensor included in the sensor module 190 may generate a sensor signal relating to a tilting operation, a shaking operation, and a rotating operation of the electronic device 100. A sensor signal that the sensor module 190 provides may be used for landscape mode or portrait mode recognition. A sensor signal that the sensor module 190 provides may be used as a specific gesture input signal.

The bus 170 may support data transmission between each of components of the electronic device 100 (for example, the communication interface 110, the input module 120, the display module 140, the storage module 150, the sensor module 190, and the control module 160). For example, the bus 170 may deliver an input signal inputted from the input module 120 to the control module 160. The bus 170 may provide a content received through the communication interface 110 to the storage module 150 or the control module 160. The bus 170 may provide a content 151 stored in the storage module 150 to the control module 160. The bus 170 may deliver a basic content related specific content to the display module 140 in correspondence to a control of the control module 160. The bus 170 may deliver search information to the communication interface 110 in correspondence to a control of the control module 160.

The control module 160 may include any suitable type of processing circuitry, such as a general-purpose processor (e.g., an ARM-based processor), a Field-Programmable Gate Array (FPGA), a Digital Signal Processor (DSP), an Application-Specific Integrated Circuit (ASIC), a Communication Processor (CP), an Application Processor (AP), etc. In operation, the control module 160 may perform processing and transmission of data relating to a management of the electronic device 100 and processing and transmission of a control signal. According to an embodiment, the control module 160 may perform an output control of at least one of a generated content generated based on a basic content in correspondence to a specified content or a related content relating to a basic content. In relation to such function support, the control module 160 may include a content processing module 180.

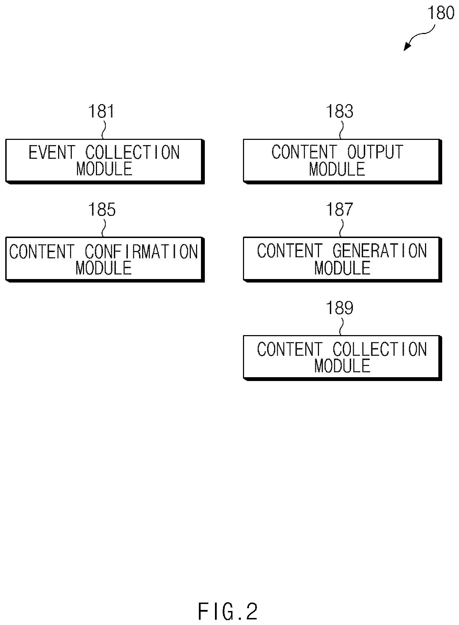

FIG. 2 is a block diagram illustrating an example of a content processing module according to an embodiment of the present disclosure.

Referring to FIG. 2, a content processing module 180 according to an embodiment may include an event collection module 181, a content output module 183, a content confirmation module 185, a content generation module 187, and a content collection module 189.

According to an embodiment, the event collection module 181 may collect at least one of an input event generated from the input module 120 of the electronic device 100, a touch event generated from the display module 140 of an input function, a gesture event generated from the sensor module 190 providing a gesture input signal, and a schedule event occurring in correspondence to predetermined schedule information. The event collection module 181 may deliver the collected event to at least one of the content output module 183, the content confirmation module 185, the content generation module 187, and the content collection module 189. According to an embodiment, the event collection module 181 may collect an event corresponding to a turn-on request while the display module 140 is turned off like a sleep mode state and may request the content output module 183 to output a specified basic content. Additionally, according to an embodiment, while a basic content is outputted or a specific content is outputted, the event collection module 181 may deliver a touch event generated from the display module 140 or a gesture event generated from the sensor module 190 to at least one of the content generation module 187 and the content collection module 189.

The content output module 183 may output a basic content to the display module 140 in correspondence to an event that the event collection module 181 delivers. In relation to this, the content output module 183 may check set scheduling information or an input event and may then output a basic content corresponding to a state of the electronic device 100. For example, the content output module 183 may output a specified basic content relating to a lock screen output as a background screen of a lock screen. For example, the content output module 183 may output a specified basic content relating to a lock screen output as a background screen of a lock screen. Additionally, the content output module 183 may output a basic content specified as a background image of a corresponding function screen in relation to a specific function screen output.

According to various embodiments, the content output module 183 may output a generated content or a related content in relation to an output condition specified in a basic content. In relation to this, the content output module 183 may output a generated content received from the content generation module 187. According to an embodiment, the content output module 183 may receive a generated content generated based on at least part of a basic content outputted or to be outputted from the content generation module 187. The content output module 183 may output the received generated content to a corresponding function screen. During this operation, the content output module 183 may replace a basic content to be outputted to the display module 140 with a generated content to output the generated content. Additionally or alternatively, the content output module 183 may output a generated content together with a basic content to be outputted.

According to various embodiments, the content output module 183 may output a related content that the content collection module 189 transmits. For example, the content output module 183 may receive a related content relating to a basic content outputted or to be outputted from the content collection module 189. The content output module 183 may output the received related content to the current display module 140. During this operation, the content output module 183 may output at least one of a content obtained by changing a basic content and a newly collected related content to the display module 140.

The content confirmation module 185 may check whether a condition on an outputted basic content or an outputted specific content is satisfied. According to an embodiment, when a request is made to output a basic content to the display module 140, the content confirmation module 185 may check the display ratio of the basic content. The content confirmation module 185 may calculate a margin area of a basic content to be outputted by comparing the display ratio of a display requested basic content and the display ratio of the display module 140. During this operation, the content confirmation module 185 may check the landscape mode state or portrait mode state of the display module 140 and may check the display state of a basic content according to each state.

When a margin area is greater than a specified size, the content confirmation module 185 may request a generated content or related content output from at least one of the content generation module 187 or the content collection module 189. According to an embodiment, while a basic content is outputted to the display module 140, the content confirmation module 185 may check whether a margin area (for example, an area other than an area where a basic content is displayed and an area where there is no additional display data relating to a basic content) is greater than a specified size. When the margin area is greater than the specified size, the content confirmation module 185 may request the output of at least one of a generated content and a related content from a corresponding module.

According to various embodiments, the content confirmation module 185 may request a corresponding module to output at least one of a generated content or a related content to the display module 140 according to a user setting. Additionally or alternatively, according to various embodiments, the content confirmation module 185 may request a corresponding module to output at least one of a generated content and a related content to the display module 140 according to a user setting. For example, when a basic content is a background screen image, the content confirmation module 185 may request the content generation module 187 to output a generated content to the display module 140. Additionally or alternatively, when a basic content is a picture that a gallery function provides, the content confirmation module 185 may request the content collection module 189 to output a related content relating to the basic content to the display module 140. Additionally or alternatively, when a basic content is an image used for a lock screen, the content confirmation module 185 may request the content collection module 189 to output a related content to the display module 140. The output of at least one of a generated content and a related content, as mentioned above, may vary according to a user setting or a design method.

The content generation module 187 may generate a specific generated content on the basis of at least part of a basic content outputted or to be outputted to the display module 140. For example, the content generation module 187 may prepare a generated content obtained by extending the size of a basic content to a size corresponding to the full screen of the display module 140. Additionally or alternatively, the content generation module 187 may prepare a generated content obtained by extending the size of at least part of a basic content to a size corresponding to the display area of the display module 140. Additionally or alternatively, the content generation module 187 may prepare a generated content by extracting at least one object (for example, a person object, a specific thing object, and a background object) included in a basic content and combining the extracted object and another content (for example, the other content stored together in a folder or a category where a basic content is stored). According to various embodiments, the content generation module 187 may prepare a generated content by using a content that the content collection module 189 collects (for example, by changing at least part of the collected content or combining the collected content with an object extracted from a basic content). According to various embodiments, the content generation module 187 may use an object extracted from a basic content or received from the outside as a generated content.

The content collection module 189 may collect a related content relating to a basic content to be outputted or outputted to the display module 140. According to an embodiment, the content collection module 189 may collect a specific content as a related content on the basis of search information including at least one of analysis information of a basic content, metadata information (or property information), situation information, and user input information.

According to various embodiments, the content collection module 189 may collect as a related content a content including metadata that is similar or substantially identical to at least part of metadata information of a basic content among other contents stored together in a folder or a category of a storage area where the basic content is stored. Additionally or alternatively, the content collection module 189 may collect a content having a classification criterion substantially identical or similar to a content classification criterion by analysis information from at least one of the storage module 150, the server 200, and an external electronic device. Additionally or alternatively, the content collection module 189 may transmit situation information to the server 200 or an external electronic device and may receive a content (for example, a content corresponding to time, weather, season, and advertisement information relating to the location of the electronic device 100) relating to situation information from the server 200 or an external electronic device. Additionally or alternatively, the content collection module 189 may collect a function screen linked to a specific content selected in correspondence to user input information as a related content. The content collection module 189 may provide the collected content to at least one of the content generation module 187 and the content output module 183.

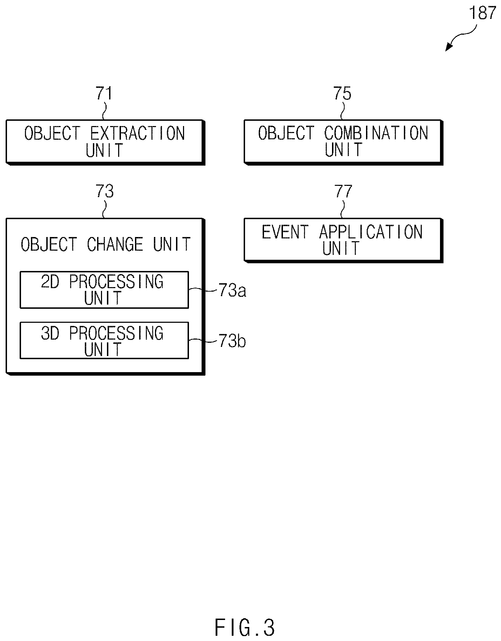

FIG. 3 is a block diagram illustrating an example of a content generation module according to an embodiment of the present disclosure.

Referring to FIG. 3, a content generation module 187 according to an embodiment may include an object extraction unit 71, an object change unit 73, an object combination unit 75, and an event application unit 77.

The object extraction unit 71 may extract at least one specific object included in content. For example, the object extraction unit 71 may extract at least one of a person object and a specific thing object. Additionally or alternatively, the object extraction unit 71 may extract a predetermined area including a specific object. The object extraction unit 71 may extract a background object included in content. The object extraction unit 71 may deliver the extracted object to at least one of the object change unit 73 and the object combination unit 75.

The object change unit 73 may change a specific object (for example, at least one of a person object and a thing object) that the object extraction unit 71 provides, a predetermined area including an object, and the form of a background object. For example, when receiving a person object, the object change unit 73 may change (for example, enlarge or downsize) a predetermined area (for example, a face area) in the person object. When receiving a specified area including a specific object, the object change unit 73 may change at least part of the specified area (for example, extend or reduce an area in a specific direction, enlarge or downsize an area, delete an area, make an area transparent, or change the color of an area). When receiving a background object, the object change unit 73 may generate an object obtained by performing blur-processing on at least part of the background object (for example, by removing or mitigating the blur). Additionally or alternatively, when receiving a background object, the object change unit 73 may generate an object obtained by enlarging or downsizing at least a partial area.

According to an embodiment, the object change unit 73 may include at least one of a 2D processing unit 73a and a 3D processing unit 73b. The 2D processing unit 73a may perform 2D processing on an object that the object extraction unit 71 extracts. For example, the 2D processing unit 73a may perform at least one processing among extending, rotating, enlarging, downsizing, and partially extracting of the extracted object. The 3D processing unit 73b may perform 3D processing on an extracted object. For example, the 3D processing unit 73b may receive a plurality of objects from the object extraction unit 71 and after generating at least one copy on the received objects, arrange it on a plurality of layers. The 3D processing unit 73b may arrange the locations of objects respectively arranged on a plurality of layers so as to have a difference by a specified part so that the object may be disposed to have a three-dimensional effect. According to various embodiments, after generating a plurality of copies in correspondence to the extracted object, the 3D processing unit 73b may perform processing to have a three-dimensional effect by gradually changing the size of each copy and then arranging it. According to various embodiments, the 3D processing unit 73b may perform processing to have a three-dimensional effect by providing a shadow effect to the extracted object.

The object combination unit 75 may combine an object (for example, a 2D object and a 3D object), which is provided from at least one of the object extraction unit 71 and the object change unit 73, and a specific content to generate a combined content. For example, the object combination unit 75 combines the received object with a content relating to a basic content to generate a combined content. The object combination unit 75 may generate a combined content by combining the received object with a specific content selected by the server 200, an external electronic device, or the storage module 150. During this operation, the object combination unit 75 may perform processing to maintain the location at which the extracted object is disposed in an initial basic content. Additionally or alternatively, the object combination unit 75 may perform processing to allow the extracted object to couple to a specified location of a related content.

The event application unit 77 may set a specific function event to at least one object. For example, when selecting a specific object in content, the event application unit 77 may set to execute a specific function. As another example, when selecting a specific object in content, the event application unit 77 may set to enlarge and display the selected object. When selecting a specific object in content, the event application unit 77 may set to output another content to the display module 140. The event application unit 77 may set to adjust the location of contents outputted to the display module 140 in correspondence to a specific input event (for example, touch drag event, flick event, and at least one tap event).

According to various embodiments, the event application unit 77 may set a specific function event to at least one object included in at least one of a generated content and a related content. When an event relating to the selection of a specific object included in a generated content or a related content occurs, the event application unit 77 may set to execute a specific object related function (for example, outputting another content, enlarging or downsizing the selected object to display the enlarged or downsized object, or executing a related function app).

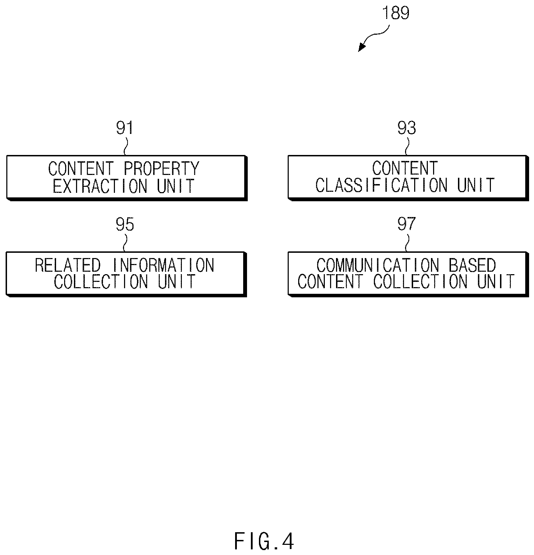

FIG. 4 is a block diagram illustrating an example of a content collection module according to an embodiment of the present disclosure.

Referring to FIG. 4, a content collection module 189 according to an embodiment may include a content property extraction unit 91, a content classification unit 93, a related information collection unit 95, and a communication based content collection unit 97.

The content property extraction unit 91 may extract the property of a content (for example, a basic content, a generated content outputted in relation to a basic content, or a related content) to be outputted or outputted to the display module 140. For example, the content property extraction unit 91 may extract metadata information of content.

When content is a picture, the metadata information may include at least one of device related metadata information at the time of collection, object related metadata information, link related metadata information, environment related metadata information, and shot mode related metadata information. The device related metadata information may include an ISO value, a Ratio value, an exposure time, device information, a size, a color value, a time, an aperture value, a focal distance, a file type, whether to flash, a flash illumination value, a filter (effect), and a white balance.

The object related metadata information may include a background image, whether it is a landscape (or whether it has a horizontal display ratio or a vertical display ratio), whether it is layered or three-dimensional, a region of interest (ROI), a User Tag, a landmark, face tagging (that is, face area analysis of a person included in content), a text, and focus information. In relation to the landmark, the electronic device may collect information on a landmark around a specified location at the time point that a picture file is collected to automatically write it in a corresponding picture file. Additionally or alternatively, the electronic device 100 may perform a search on a specific region in relation to a corresponding region or location by accessing the server 200 and may extract landmark information from a search result to provide it. In relation to the face tagging, the electronic device 100 may store an algorithm relating to face recognition and face analysis. On the basis of the stored algorithm, the electronic device 100 may perform auto face tagging by analyzing a face area. When there is a previously stored similar face image, the electronic device 100 may perform auto face tagging on an inputted face image by using information relating to the previously stored similar face image.

The link related metadata information may include SNS (Social Networking Site) link information, URL (Uniform resource Locator) link information, a user memo, a sound, a storage path (for example, information on a storage location where a corresponding content is stored, information on an arrangement with other contents in a stored location, its location information in a continuous arrangement structure, and its previous content arrangement information and subsequent content arrangement information), a file name, and a folder name. The environment related metadata information may include location, weather (provided by collecting weather information of a corresponding location from the server 200 when pictures are taken by the electronic device 100), and composition/bird's-eye view. The shot mode related metadata information may include information such as dual shot, front and rear content (classification of information captured by a front camera or a rear camera), and panorama.

The content property extraction unit 91 may extract content analysis information. In relation to this, the content property extraction unit 91 may extract visual components displayed on content, for example, specific color, brightness, and saturation, as content analysis information. Additionally, the content property extraction unit 91 may extract object related emotion information and atmosphere information included in content as property information. In relation to the emotion information, the electronic device 100 may extract an emotion property according to a determination on a smiling face, an angry face, and a crying face on the basis of a face analysis of a face in content. In relation to this, the electronic device 100 may store a database relating to various expressions and may perform a face comparison analysis. In relation to the atmosphere information, the electronic device 100 may extract an atmosphere property relating to a corresponding content in comparison with atmosphere information pre-defined based on time, weather information, season information, and temperature or humidity information at the time point of content collection. In relation to this, the electronic device 100 may store a database supporting atmosphere information comparison or perform a server device access providing corresponding information.

The content classification unit 93 may classify contents on the basis of at least one of property information and analysis information that the content property extraction unit 91 extracts. For example, the content classification unit 93 may classify at least one content 151 stored in the storage module 150 by property information (for example, location reference, weather reference, face tagging information, and time information reference). Additionally or alternatively, the content classification unit 93 may classify contents received from the server 200 or an external electronic device on the basis of at least one property information.

The related information collection unit 95 may collect a related content relating to a basic content on the basis of at least one of property information or analysis information provided by the content property extraction unit 91, situation information provided by the communication interface 110 or the sensor module 190, and user input information provided by the input module 120.

According to an embodiment, the related information collection unit 95 may detect a content relating to a basic content from the storage module 150 on the basis of information classified by the content classification unit 93. For example, the related information collection unit 95 may collect at least one content from contents including the same location information as the basic content among the contents 151 stored in the storage module 150. Additionally or alternatively, the related information collection unit 95 may collect at least one content from contents including the same weather information as the basic content among the contents 151 stored in the storage module 150. The related information collection unit 95 may deliver at least one collected content as a related content to the storage module 150. The related information collection unit 95 may deliver at least one content to at least one of the content generation module 187 and the content output module 183.

The communication based content collection unit 97 may collect a related content relating to a basic content from the server 200 or an external electronic device on the basis of at least one of property information, analysis information, situation information, and user input information that the content property extraction unit 91 provides. For example, the communication based content collection unit 97 may transmit search information (at least one of property information, analysis information, situation information, and user input information) to the server 200 or external electronic devices. During this operation, the communication based content collection unit 97 may transmit a content delivery request relating to search information to the server 200 or an external electronic device. The communication based content collection unit 97 may provide a related content provided from at least one of the server 200 and an external electronic device to at least one of the storage module 150, the content generation module 187, and the content output module 183.

According to various embodiments, an electronic device according to an embodiment may include a content processing module checking an output condition of a content outputted or to be outputted and when the output condition satisfies a specified condition, outputting at least one of a generated content generated based on at least part of content information (for example, at least one of a screen component relating to at least one object relating to content display and description information (content creation date, tag information, and content link information) describing content) of the content and a related content relating to the content information; and a display module outputting the generated content or the related content.

According to various embodiments, the content processing module may set the generated content or related content output on the basis of at least one of the size of a margin area of the content, the output size of the content, a location at which the content is outputted, the output color of the content, and the type or number of objects included in the content.

According to various embodiments, the content processing module may set a content generation of at least one of a generated content generated based on at least part of a screen component of the content, a generated content generated by changing at least part of a screen component of the content, and a generated content obtained by combining an object extracted from a screen component of the content with another content, or an output of a generated content.

According to various embodiments, the content processing module may set a content generation of at least one of a generated content generated by enlarging at least one object included in the content, a generated content generated by extending(or expanding) the content, and a generated content generated by extending(or expanding) an area other than an area including at least one object in the content, or an output of a generated content.

According to various embodiments, the content processing module may set the output of at least one of a related content including at least part of the content information, a related content of which at least part is similar or substantially identical to the content information, and a related content obtained in relation to situation information of an electronic device outputting the content.

According to various embodiments, the content processing module may set to output as the related content at least one of map information relating to a region where the electronic device is located at the time point of outputting the content or at the content output requested time point, advertisement information collected from a region where the electronic device is located at the time point of outputting the content or requesting the output, map information relating to location information written in the content information, and advertisement information relating to location information written in the content information.

According to various embodiments, the content processing module may set to collect a related content of which at least part is similar or substantially identical to the content information from a storage module, transmit search information relating to the content to an external device, and receive a found related content from the external device.

According to various embodiments, the search information may include at least one of property information corresponding to the content information, analysis information obtained by analyzing a screen component of the content, situation information of an electronic device outputting the content, and user input information for selecting at least one of the generated content and the related content.

According to various embodiments, the content processing module may output the content for a specified time or skip the content output and may set to output the generated content or the related content when the specified time elapses, with or without the basic content output.

According to various embodiments, when receiving an input event relating to at least one of the generated content and the related content, the content processing module may set to output a content according to a function execution linked to the generated content or the related content.

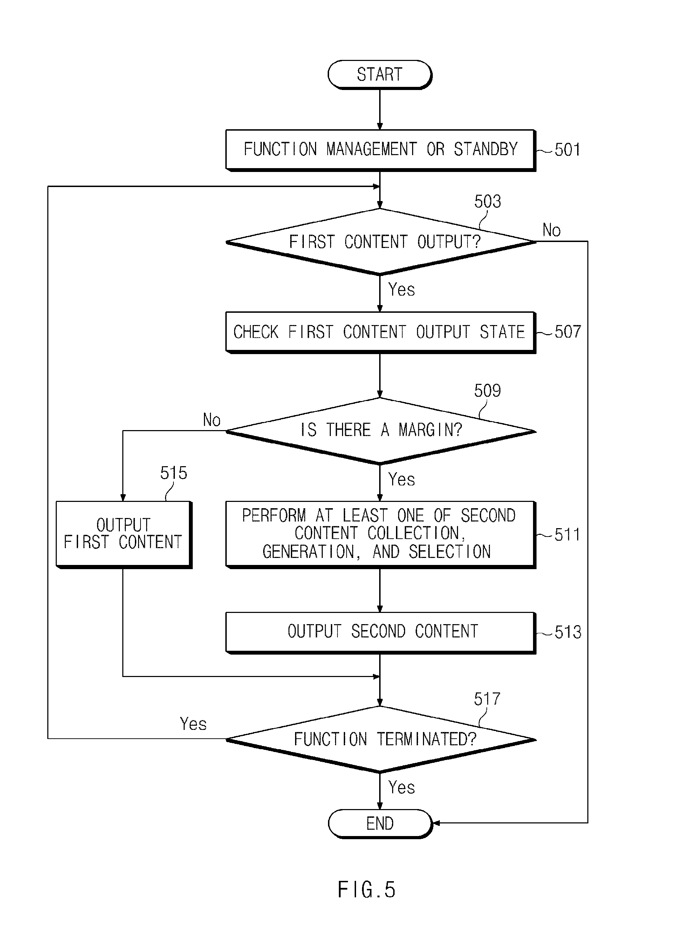

FIG. 5 is a view illustrating a content management method according to an embodiment of the present disclosure.

Referring to FIG. 5, is a flowchart of an example of a process, according to embodiments of the present disclosure. According to the process, the control module 160 may perform a function management or standby in operation 501. For example, the control module 160 may maintain a sleep mode state or may support a lock screen state. Additionally or alternatively, the control module 160 may control a corresponding function execution in correspondence to a specific function execution request.

In operation 503, the control module 160 may detect whether an event relating to an output of a first content (for example, a basic content) occurs or there is a specified event. If there is no event relating to the first content output in operation 503, the control module 160 may end the process. Additionally or alternatively, if no event occurs, the control module 160 may maintain a previous state.

If there is an event relating to the first content output in operation 503, the control module 160 may detect a first content output state in operation 507. Then, the control module 160 may detect whether a margin occurs when or before the first content is outputted in operation 509. During this operation, the control module 160 may determine (consider at least one of the display ratio of the first content, the display ratio of the display module 140, and a display orientation) whether a margin occurs before the first content is outputted. Additionally or alternatively, after the first content is outputted to the display module 140, the control module 160 detects (considers the first content displayed ratio and the display ratio of the display module 140 or detects an area where no data is outputted from the display module 140) whether a margin occurs by detecting the display module 140 after the first content is outputted to the display module 140. In some implementations, a margin may be found to exist if the distance between an edge of the first content and an edge of the display module 140 (*e*.*g*., an edge of a visible portion of a touchscreen) would exceed a predetermined reference value when the first content is displayed.

When it is detected in operation 509 that a margin of more than a specified reference value occurs, the control module 160 may perform at least one of collection, generation, and selection of a second content (for example, a generated content generated from at least part information of the first content and a related content collected in relation to at least one of analysis information, property information, and situation information of the first content). During the second content collection operation, the control module 160 may collect at least one of the contents 151 stored in the storage module 150 in relation to the first content. For example, the control module 160 may collect a related content on the basis of at least one of property information of the first content (file information displaying the first content), analysis information (information obtained by analyzing display characteristics or included objects of the first content), and situation information (information obtained based on at least one of the communication interface 110 and the sensor module 190 at the time of outputting the first content). Additionally, the control module 160 may transmit at least a portion of the above-mentioned property information, analysis information and situation information to the server 200 or another external electronic device and may receive a content corresponding to corresponding information from the server 200 or an external electronic device.

During the second content generation operation, the control module 160 may extract at least one object included in the first content and may generate a modified object by extending(or expanding), rotating, cutting, enlarging, or downsizing the extracted object. The extracted object may include any portion of the first content. In some implementations, when the first content is an image, the extracted object may include only a portion of the image in which a given subject is depicted. The modified object may be used as the second content. According to various embodiments, the control module 160 may generate the second content by combining at least one of an extracted object and a modified object with another content, for example, the content 151 stored in the storage module 150 or a content collected from the server 200. At this point, the combined content may be a content relating to the first content.

During the second content selection operation, the control module 160 may detect an event for selecting the first content outputted to the display module 140 or an event for selecting at least one of the second content outputted in correspondence to the margin size of the first content. According to an embodiment, when there is a function linked to the selected content, the control module 160 may obtain a corresponding link function execution screen as the second content. According to various embodiments, when receiving an input event for moving the second content, the control module 160 may control the output of a content relating to another content in correspondence to a corresponding input event, for example, another content relating to the first content or a selected second content. According to various embodiments, the control module 160 may control the output of at least one of a generated content generated based on at least part of the first content or a generated content generated by using at least part of the second content.

The control module 160 may output the second content to the display module 140. The control module 160 may output the second content (at least one of a generated content and a related content) to the display module 140 in full screen. Additionally or alternatively, the control module 160 may output the second content to a margin area while maintaining the first content.

If a margin of a specific reference value does not occur in operation 509, the control module 160 may output the first content or maintain a display state of the outputted first content in operation 515.

In operation 517, the control module 160 may detect whether a function termination related event occurs. When the function termination related event occurs, the control module 160 may return to operation 501 and may then perform subsequent operations again. When no function termination related event occurs in operation 517, the control module 160 may branch into operation 503 and may then perform subsequent operations again.

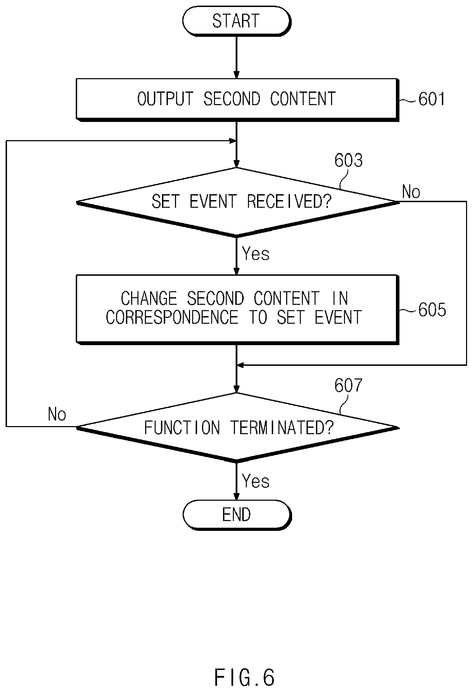

FIG. 6 is a flowchart of an example of a process according to another embodiment of the present disclosure.

Referring to FIG. 6, in relation to a content management method according to another embodiment, the control module 160 may output a second content (for example, a generated content generated based on at least part of the first content or a related content relating to the first content) to the display module 140 in operation 601. Additionally or alternatively, the control module 160 may maintain an output state of the second content in the display module 140.

The control module 160 may detect whether a specified event is received in operation 603. For example, the control module 160 may detect whether there is an event for selecting the second content outputted to the display module 140 or an event for selecting the second content and then moving it on the display module 140. When the specified event is received in operation 603, the control module 160 may change the second content in correspondence to the specified event in operation 605.

According to an embodiment, the control module 160 may remove the second content from the display module 140 and output another content (a related content relating to the first content or a generated content relating to the first content) to the display module 140. According to various embodiments, when another newly outputted content is a content with a margin, the control module 160 may output at least one of a content generated based on the other newly outputted content or a related content relating to the other newly outputted content to the display module 140.

According to an embodiment, the control module 160 may output a new content in correspondence to a specified event occurrence. For example, the control module 160 may remove a content being outputted to the current display module 140 in correspondence to a specific sensor signal occurrence such as a tilting operation of the electronic device 100 and output a new content. During this operation, the control module 160 may extract at least one object from a previously outputted content and overlay the extracted object on a newly outputted content in order for outputting it. Additionally or alternatively, the control module 160 may combine the extracted object with a content to be outputted newly and output the combined content to the display module 140.

According to an embodiment, while the first content and the second content are outputted at the same time, the control module 160 may control a location switching of the first content and the second content in correspondence to a specified event occurrence. When an additional specified event (for example, a change of a horizontal arrangement or a vertical arrangement) occurs, the control module 160 may output the second content in full screen.

According to an embodiment, while the first content and the second content are outputted at the same time, the control module 160 may display the second content in full screen or output a screen relating to a link item in correspondence to the occurrence of a specified event (for example, an event for selecting the second content or an event for selecting at least one link item included in the second content). After outputting the second content in full screen, the control module 160 may control a function execution relating to the second content in correspondence to an additionally occurring event.

When no specified event is received in operation 603, the control module 160 may skip operation 605. The control module 160 may detect whether a function termination event occurs in operation 607. When the function termination event occurs in operation 607, the control module 160 may return to a specific function execution state, for example, a second content output state, a first content output state, or a specified function execution state. When no function termination event occurs in operation 607, the control module 160 may branch into operation 603 and may then perform subsequent operations again.

According to various embodiments, a content management method according to an embodiment may include detecting an output condition of a content outputted or to be outputted to a display module and when the output condition satisfies a specified condition, outputting to the display module at least one of a generated content and related content. The generated content may include content that is generated based on at least part of the content information (for example, at least one of a screen component relating to at least one object relating to content display and description information (content creation date, tag information, and content link information) describing content). And the related content may include content related to the content information.

According to various embodiments, the detecting of the output condition may be set to include at least one of detecting whether the size of a margin area of the content is greater than a specified size, detecting whether the output size of the content is less than a specified size (e.g., detecting whether a horizontal and/or vertical dimension of the content exceeds a threshold), detecting whether a location at which the content is outputted is a specified location, detecting whether the output color of the content is a specified color, and detecting the type or number of objects included in the content.

According to various embodiments, the method may be set to include at least one of preparing the generated content by extracting at least part of a screen component of the content, preparing the generated content by changing at least part of a screen component of the content, and preparing the generated content by combining an object extracted from a screen component of the content with another content.

According to various embodiments, the outputting of the at least one of the generated content and the related content may include outputting a generated content generated by enlarging at least one object included in the content, outputting a generated content generated by extending the content, and outputting a generated content generated by extending an area other than an area including at least one object in the content.

According to various embodiments, the method may include receiving a related content of which at least part is similar or substantially identical to the content information, receiving a related content obtained in relation to situation information on an electronic device outputting the content, and collecting at least part of the content information as a related content.

According to various embodiments, the outputting of the at least one of the generated content and the related content may include outputting a map of a region where the electronic device is located at the time of outputting the content or at the time when output of the content is requested, outputting an advertisement associated with a region where the electronic device is located at the time of outputting the content or the time when output of the content is requested, outputting a map of a location identified by the content (e.g., location identified by a geotag that is part of the content), and outputting an advertisement associated with a location identified by the content.

According to various embodiments, the method may be set to include at least one of collecting a related content of which at least part is similar or substantially identical to the content information from a storage module, and transmitting search information relating to the content to an external device and receiving a found related content from the external device.

According to various embodiments, the search information may include at least one of property information corresponding to the content information, analysis information obtained by analyzing a screen component of the content, situation information of an electronic device outputting the content, and user input information for selecting at least one of the generated content and the related content.

According to various embodiments, the outputting of the at least one of the generated content and the related content may include outputting the content for a specified time or skipping the content output, and then outputting the generated content or the related content when the specified time elapses or without the content output.

According to various embodiments, the method may include receiving an input event relating to at least one of the generated content and the related content or outputting a content according to a function execution linked to the generated content or the related content.

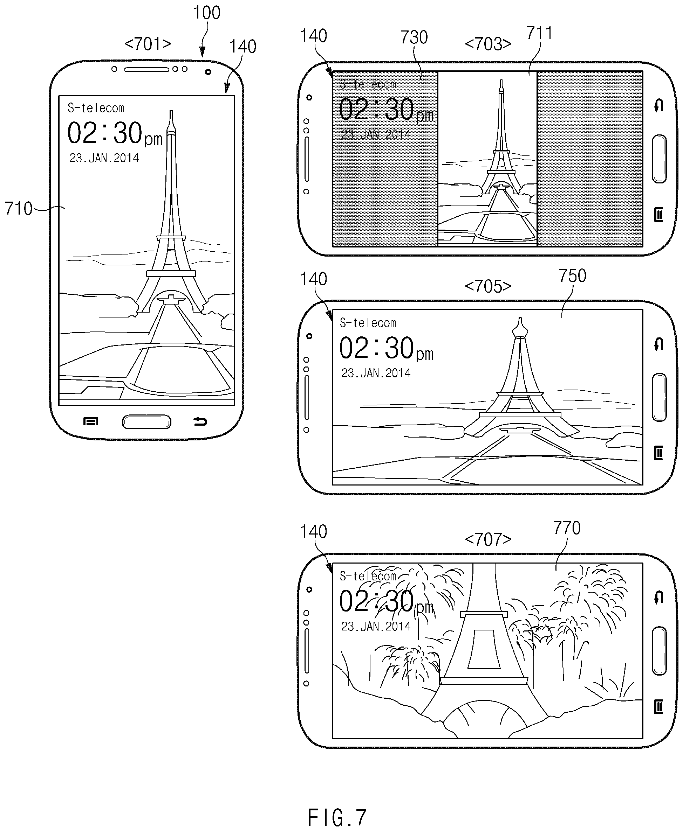

FIG. 7 is a diagram illustrating a content change output function according to an embodiment of the present disclosure.

Referring to FIG. 7, according to an embodiment, the content processing module 180 may output a content 710 to a display module 140 in response to an event occurrence as shown in a state 701. For example, the content processing module 180 may detect an event relating to a function execution requesting a content 710 to be outputted on the display module 140, for example, an event relating to a sleep mode release, an event relating to a lock screen output, an event relating to a standby screen output, and an event relating to a gallery function execution. The content processing module 180 may output the content 710 to the display module 140 on the basis of information (for example, schedule information) associated with each function. For example, the content 710 may be displayed over the entire display area of the display module 140 according to a vertical arrangement state of the electronic device 100.

The content processing module 180 may change a display direction of the content 710 in correspondence to the reception of a specified event (for example, a change from a vertical state to a horizontal state or a change from horizontal state to a vertical state). For example, the content processing module 180 may output the content 710 to the display module 140 in the horizontal arrangement state of the electronic device 100. According to a specified display ratio of the content 710, the content 710 may be outputted as a change content 711 where a margin area 730 occurs as shown in a state 703.

According to an embodiment, when the margin area 730 is greater than a specified size, the content processing module 180 may change the change content 711 into a content 750, thereby outputting the content 710 to the display module 140 as shown in a state 705. For example, the content processing module 180 may generate the content 750 by applying a horizontal extension to correspond to the horizontal display ratio of the display module 140. The content processing module 180 may output time information to a specific location independently of the output of the content 710, the change content 711, or the content 750.

According to an embodiment, when the margin area 730 is greater than a specified size, the content processing module 180 may replace the change content 711 with a content 770, thereby outputting the content 770 to the display module 140 as shown in a state 770. For example, the content processing module 180 may collect a related content relating to the change content 711. The content processing module 180 may select any one of at least one collected related content, thereby outputting the selected one to the display module 140. According to an embodiment, the content processing module 180 may select as the content 770 a content disposed adjacently to the content 710 among other contents stored in the same folder as the content 710 outputted to the display module 140. Additionally or alternatively, the content processing module 180 may randomly select one of other contents belonging to the same category as the content 710 to provide the selected one as the content 770. Additionally or alternatively, the content processing module 180 may select as the content 770 a content that is similar to the content 710. A content may be considered similar to the content 710 if it is associated with property information, analysis information, and situation information that matches the property information, analysis information, and/or situation information of the content 710, respectively.

According to various embodiments, the content processing module 180 may omit an operation for outputting the change content 711 in the state 703 during an operation for changing the state 701 into the state 703 and execute the state 705 or 707 in which the content 750 or 770 is outputted. In relation to this, when an arrangement of the electronic device 100 is changed, the content processing module 180 may detect what the size of the margin area 730 would be if the content 711 were to be displayed, as shown with respect to state 703. The content processing module 180 may then output the content 750 or 770 in response to the size of the margin area 730 exceeding a reference value without first outputting the content 711 .

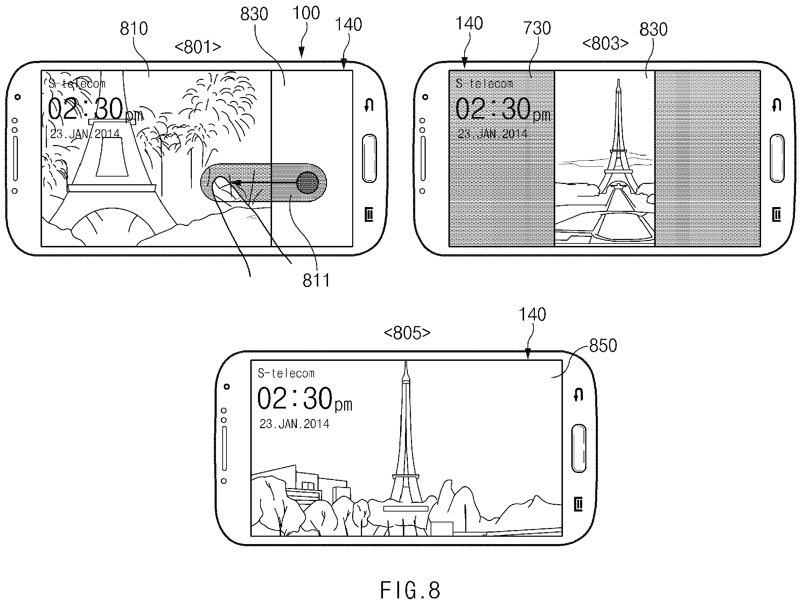

FIG. 8 is a diagram illustrating an event application of a changed content according to an embodiment of the present disclosure.

Referring to FIG. 8, according to an embodiment, the content processing module 180 may output a content 810 to a display module 140. The content 810 may be outputted to the entire display area of the display module 140, for example. Additionally or alternatively, the content 810 may be outputted to the display area of the display module 140 but may be outputted in a state in which a margin area is less than a specified value.

Referring to FIG. 8, according to an embodiment, the content processing module 180 may receive an input event 811 (for example, a drag event selecting and then moving the content 810) as shown in a state 801. In response to this event, the content processing module 180 may move the content 810. The content processing module 180 may continuously output a content 830 right after the content 810 as the content 810 moves. When the length of the dragging gesture exceeds a specified threshold, the content processing module 180 may output the content 803 to the display module 140 as shown in a state 803. The content 830 may be a content disposed in the same folder or the same category as the content 810. Additionally or alternatively, the content 830 may be a generated content generated from the basic content described with reference to FIG. 7 or a related content.

As shown in the drawing, the content 830 may be a content of which margin area 730 is greater than a specified size. When the margin area 730 of the content 830 is greater than a specified size, the content processing module 180 may output a generated content 850 generated based on at least part of the content 830 or a related content 850 relating to the content 830 as shown in a state 805. The generated content or related content 850 may be outputted to the entire screen of the display module 140.

According to various embodiments, when an input event 811 occurs, the content processing module 180 may estimate the size of the margin 730 if the content 830 were to be displayed, as shown with respect to state 803. Afterwards, in response to the size (or width) of the margin 730 exceeding a threshold, the processing module may display the content 850 without displaying the content 830 first. For example, the content processing module 180 may check a display ratio for a specific display direction of the content 830. When a display ratio for a specific display direction of the content 830 is a ratio having a margin area of more than a specified size, the content processing module 180 may skip the state 803 and output at least one of the generated content or related content 850 in the state 805.

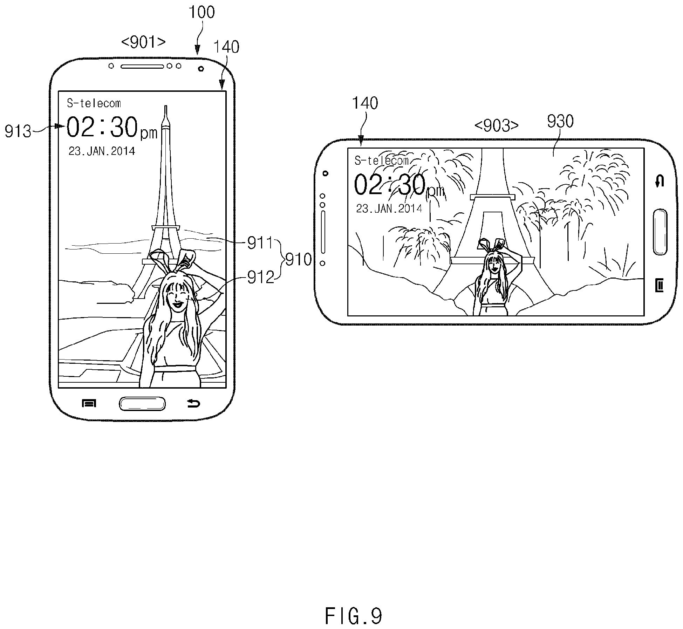

FIG. 9 is a diagram illustrating a content change output function according to an embodiment of the present disclosure.

Referring to FIG. 9, according to an embodiment, the content processing module 180 may output a content 910 to a display module 140 in response to the execution of a specific function as shown in a state 901. For example, the content 910 may be displayed over the entire display area of the display module 140 when the electronic device 100 is in a vertical state. Additionally, the content 910 may be a content including a background object 911 and a person object 912 (for example, a person object and a face object). The content processing module 180 may further output time information 913 in addition to the content 910.

The content processing module 180 may receive a sensor signal (for example, a sensor signal relating to a change from a vertical state to a horizontal state) relating to a mode change of the electronic device. The content processing module 180 may change the electronic device 100 from a vertical state (*e.g*. portrait orientation) into a horizontal state (*e*.*g*., landscape orientation. The content processing module 180 may check an output form of the content 910 in correspondence to a horizontal arrangement. For example, the content 910 may have a margin area of more than a specified size when the device 100 is oriented horizontally. Accordingly, in response to determining that the margin area would exceed the specified size, the content processing module 180 may display the content 930 in place of the content 910, when the device 100 is rotated, as shown in a state 903. Additionally or alternatively, the content processing module 180 may change the content 910 to the content 930 (for example, a generated content) generated based on at least part of the content 910 and outputted to the entire area of the display module 140 in a horizontal state as shown in the state 903.

According to an embodiment, the content processing module 180 may extract a person object 912 from objects included in the content 910 in the state 901. The content processing module 180 may display the extracted person object 912 together with the content 930 as shown in the state 903. During this operation, the content processing module 180 may combine the person object 912 with the content 930 and then output the result to the display module 140. According to an embodiment, the content processing module 180 may output the content 930 to the display module 140 and then overlay the person object 912 at a specified location and output it. The location of the person object 912 may be a specified location of the content 930. For example, the content processing module 180 may position the content 930 at the center when the content 930 is displayed (or when the content 930 is used as a background). The content processing module 180 may output the person object 912 to the location in the content 930 corresponding to the location in the content 910. The content processing module 180 may store the content 930 combined with the person object 912 in the storage module 150.

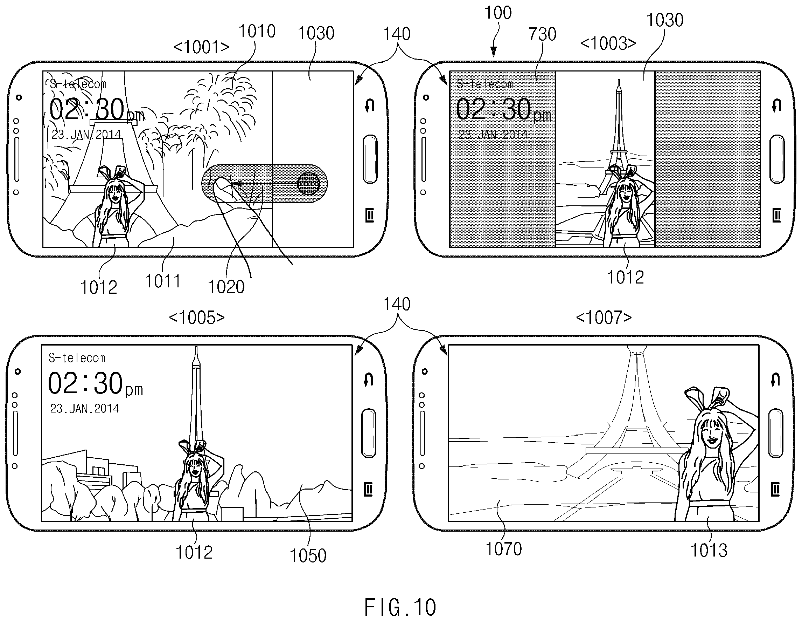

FIG. 10 is a diagram illustrating an event application of a content changed based on an object according to an embodiment of the present disclosure.

Referring to FIG. 10, according to an embodiment, the content processing module 180 may output a content 1010 to which a person object 1012 is applied to a display module 140. The content processing module 180 may detect a specific input event 1020 (for example, a touch event for moving the content 1010) from the display module 140 as shown in a state 1001. The content processing module 180 may move and display the content 1010 in correspondence to the input event 1020. At this point, the content processing module 180 may move the content 1010 together with the person object 1012.

A content 1030 may be continuously outputted to the display module 140 with a movement of the content 1010. For example, as shown in a state 1003, the content 1030 may be outputted to the display module 140. As shown in the drawing, the content 1030 may be a content having a margin area 730 of more than a specified size. During this operation, the content processing module 180 may apply the person object 1012 extracted from the content 1010 to the content 1030. For example, the content processing module 180 may generate the content 1030 by overlaying or combining the person object 1012 with a specified area of the display module 140. The content processing module 180 may ensure that the person object 1012 is not displayed in the margin area 730.

The content processing module 180 may replace the content 1030 having the margin area 730 of more than a specified size with one of a content 1050 in a state 1005 and a content 1070 in a state 1007.

According to an embodiment, the content processing module 180 may output the content 1050 relating to the content 1030 to the display module 140. During this operation, the content processing module 180 may combine the person object 1012 extracted from the content 1010 with the content 1050, thereby outputting it to the display module 140. Additionally or alternatively, the content processing module 180 may output the content 1050 to the display module 140 and then overlay the person object 1012 at a specified location and output it. For example, the content processing module 180 may arrange the person object 1012 to be disposed in the central area of the content 1050 or may determine a display location in a display area of the content 1050 based on the location of the person object 1012 in the content 1010.

According to an embodiment, the content processing module 180 may output the content 1070 generated based on the content 1030 to the display module 140. During this operation, the content processing module 180 may extract the person object 1012 from the content 1010 or the content 1030 and may combine the person object 1012 with a content to be outputted to the display module 140 to generate the content 1070. Additionally or alternatively, the content processing module 180 may generate the content 1070 by modifying the background object 1011 of the content 1030 and to overlay a person change object 1013, thereby outputting it with an output of the content 1070. The content processing module 180 may enlarge or reduce the size of the object 1012 to generate the change object 1013 as shown in the state 1007. Additionally or alternatively, the content 1070 may include a change object obtained by extending the background object 1011 of the content 1030 in a state 1003, for example. Additionally or alternatively, the content 1070 may include a change object obtained by extending the background object 1011 of the content 1030 and then performing blur-processing, for example. The blur-processed change object may be used as a background image to help other objects (*e.g*., the change object 1013) in the content 1070 to stand out. The content processing module 180 may determine the location of the person change object 1013 in the content 1070 on the basis of the content 1030. For example, the content processing module 180 may arrange the change object 1013 to be situated on the lower right side of the content 1070 based on the person object 1012 being situated on the lower right side of the content 1030 (for example, disposed far away from or close to the center line of a specified area or an arbitrary reference line in one direction.

According to various embodiments, the content processing module 180 may omit the display of the content 1030 in the state 1003. Additionally or alternatively, after outputting the content 1030 in the state 1003 for a specified time (for example, several milliseconds to several seconds), the content processing module 180 may automatically control the output of a display screen in the state 1005 or a display screen in the state 1007.

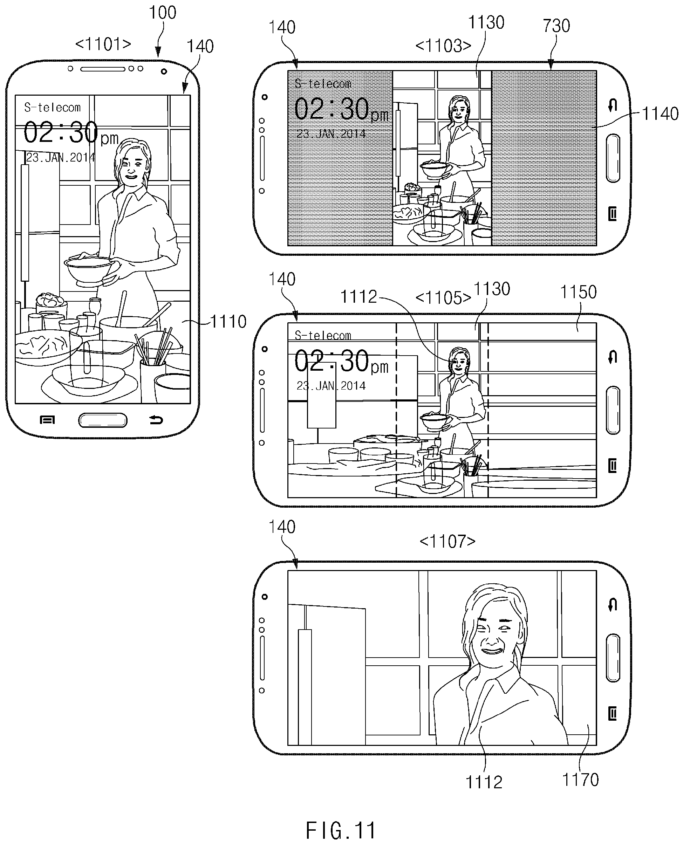

FIG. 11 is a diagram illustrating a first content change output function according to an embodiment of the present disclosure.

Referring to FIG. 11, according to an embodiment, the content processing module 180 may output a content 1110 to a display module 140 in correspondence to a vertical arrangement state of an electronic device 100 as shown in a state 1101. The content 1110 may be a content (for example, a background screen image, a lock screen image, and a standby screen image) specified to be outputted to the display module 140 in correspondence to set schedule information.

When the electronic device 100 is rotated (for example, a change from a vertical state into a horizontal state or a change from a horizontal state into a vertical state), as shown in a state 1103, the content processing module 180 may output to the display module 140 a content 1130 (for example, a content that is scaled down in order to fit in the display module 140) that is outputted with a specified display ratio in a horizontal state in correspondence to the screen display ratio of the content 1110 as shown in a state 1103. For example, the content processing module 180 may perform an output to have a margin area of more than a specified size in correspondence to the horizontal state screen display ratio of the content 1130 as shown in the drawing. During this operation, the content processing module 180 may output a content 1140 in the margin area 730. For example, the content processing module 180 may output the content 1140 having a specific color to the margin area 730. Additionally or alternatively, the content processing module 180 may output the content 1140 of a specific pattern to the margin area 730. The content processing module 180 may output a content 1130 together with the content 1140.

According to various embodiments, the content processing module 180 may output the changed content 1130 of the content 1110 and output a content 1150 obtained by extending an edge portion of the content 1130 to the margin area 730 as shown in the state 1005. For example, the extended content 1150 may include at least part of the content 1130. According to an embodiment, the content processing module 180 may perform processing to extend the area between the edge of the content 130 and the person object 1112, thereby generating the content 1150. During this operation, the content processing module 180 may uniformly process the extended ratio of a content outputted to the margin area 730. Additionally or alternatively, the content processing module 180 may apply the extended ratio of a content outputted to the margin area 730 smaller as it is closer to the area of the person object 1112. The content processing module 180 may apply the extended ratio of a content outputted to the margin area 730 with a large value as it is farther away from the person object 1112.

According to various embodiments, the content processing module 180 may perform processing to display over the entire display area a content 1170 generated by enlarging a partial area in the content 1110 or the content 1130 as shown in a state 1107. For example, the content processing module 180 may extract an area including at least part of the person object 1112 included in the content 1110 or the content 1130 and may control the output content 1170 that is enlarge-processed to display the extracted area in the entire display area of the display module 140. Additionally or alternatively, the content processing module 180 may extract a specified area including a face area in the person object 1112 and may control the output of the content 1170 obtained by enlarge-processing the extracted specified area including a face.

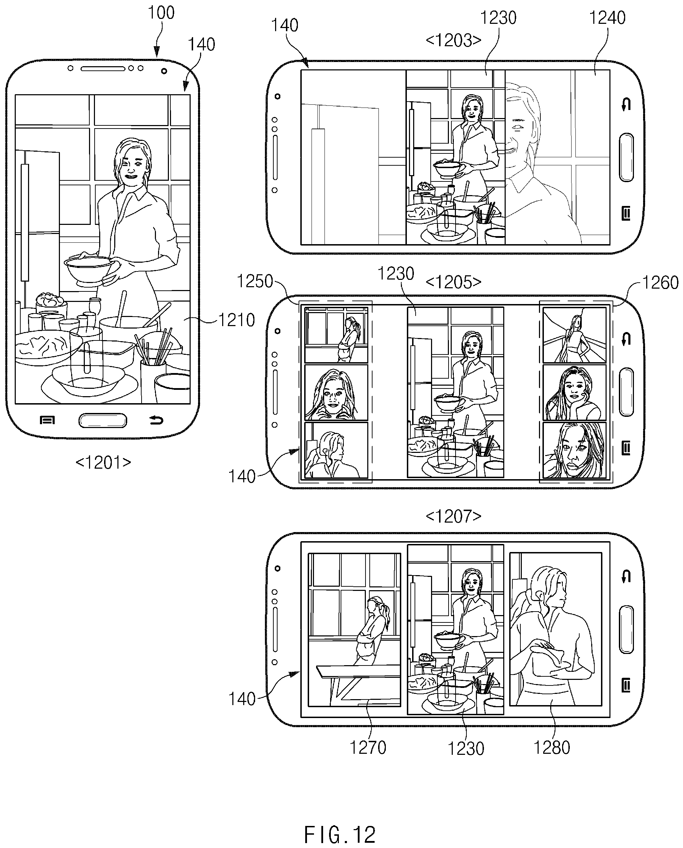

FIG. 12 is a diagram illustrating a plurality of content output functions according to an embodiment of the present disclosure.

Referring to FIG. 12, according to an embodiment, the content processing module 180 may output a content 1210 to a display module 140 in a vertical arrangement state of the electronic device 100 as shown in a state 1201. The content 1210 may be a content specified to be outputted to the display module 140 in correspondence to set schedule information.

According to an embodiment, when the arrangement state of the electronic device 100 is changed (e.g. when the electronic device is rotated), as shown in a state 1203, the content processing module 180 may output to one screen side of the display module 140 a content 1230 is displayed (for example, a content obtained by scaling down the content 1210 in order to fit the width of the display module 140) that corresponds to the screen display ratio of the content 1210 in the horizontal state of the electronic device 100. Additionally, the content processing module 180 may output a content 1240 generated based on the content 1210 as a background content of the content 1230. For example, the content processing module 180 may output the content 1240 obtained by enlarging a specified part of the content 1210 as the background content of the content 1230. Additionally, after enlarging the specified part of the content 1210, the content processing module 180 may output the blur-processed content 1240 as the background content of the content 1230. The state 1203 represents a state in which the content 1230 is displayed at the screen center and the content 1240 is displayed as a background content.

According to an embodiment, the content processing module 180 may identify contents 1250 and 1260 that are related to the content 1230 or the content 1210 and output them in the side(s) of the display module 140 as shown in a state 1205. For example, the content processing module 180 may arrange the content 1230 at the center, the contents 1250 at the left of the content 1230, and the contents 1260 at the right of the content 1230. For example, the contents 1250 or the contents 1260 may be selected on the basis of being stored in the same folder as the content 1210. Additionally or alternatively, the contents 1250 and 1260 may be selected on the basis of being classified in the same category as the content 1210. Additionally or alternatively, the contents 1250 and 1260 may be selected based on at least one of property information, analysis information, and situation information of the content 1210.

According to an embodiment, the content processing module 180 may collect contents 1270 and 1280 relating to the content 1230 or the content 1210 to output them to one screen side of the display module 140 as shown in a state 1207. For example, the content processing module 180 may arrange the content 1230 at the center, the content 1270 at the left of the content 1230, and the content 1280 at the right of the content 1230. For example, the contents 1270 and 1280 may be other contents belonging to a folder where the content 1210 is stored or the same category as the content 1210. Additionally or alternatively, the contents 1270 and 1280 may be contents having a specified screen display ratio among contents relating to at least one of property information, analysis information, and situation information of the content 1210 when the display module 140 is in a horizontal state as shown in the drawing. Additionally or alternatively, the contents 1270 and 1280 may be contents displayed over the entire display area of the display module 140 when the electronic device 100 is disposed in a vertical state.

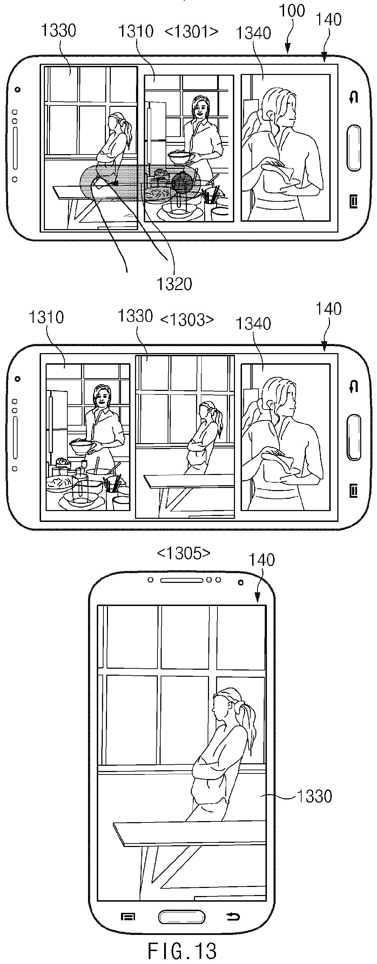

FIG. 13 is a diagram illustrating an event application to a plurality of contents according to an embodiment of the present disclosure.

Referring to FIG. 13, according to an embodiment, the content processing module 180 may output a content 1310, a content 1330, and a content 1340 as shown in a state 1301 when an electronic device 100 is disposed in a horizontal state. When an input event 1320 for selecting the content 1310 occurs, the content processing module 180 may change the locations of the content 1310 and the content 1330 as shown in a state 1303 in correspondence to the input event 1320. Accordingly, the display module 140 may have a state in which the content 1330 is disposed at the center, a state in which the content 1310 is disposed at the left of the content 1330, and a state in which the content 1340 is disposed at the right of the content 1330. The input event 1320 may include a touch event for selecting the content 1310 and a drag event for dragging the content 1310.

According to an embodiment, when the electronic device 100 is disposed in a vertical state, the content processing module 180 may output the content 1330 disposed at the center to the entire screen of the display module 140 as shown in a state 1305. For example, the content 1330 may have a screen display ratio (*e.g*., aspect ratio) that matches the screen display ratio (*e.g*. aspect ratio) of the entire screen of the electronic device 100, when the electronic device is oriented vertically.

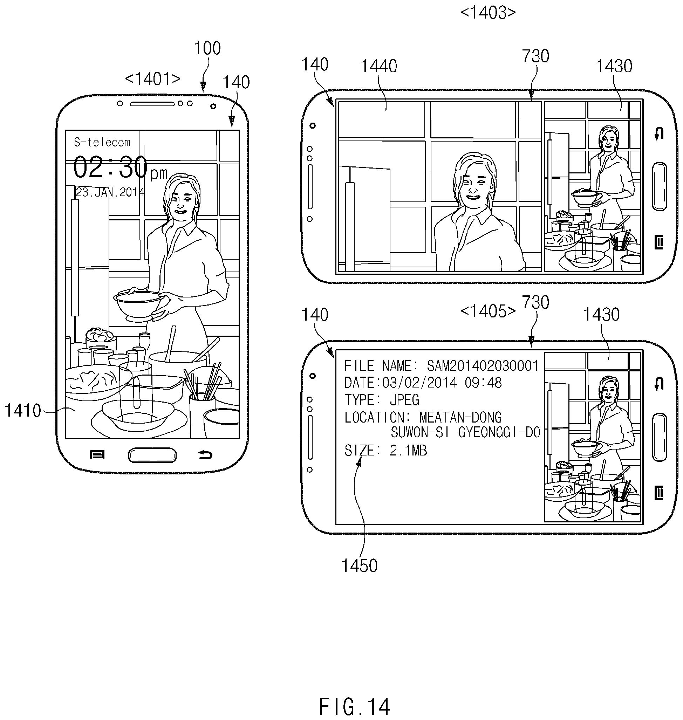

FIG. 14 is a diagram illustrating a content management depending on margin processing according to an embodiment of the present disclosure.

Referring to FIG. 14, according to an embodiment, as shown in a state 1401, the content processing module 180 may output a content 1410 to the entire screen of the display module 140 in correspondence to the display ratio of the content 1410 when an electronic device 100 is disposed in a vertical state.

According to an embodiment, when the electronic device 100 is disposed from a vertical state into a horizontal state, as shown in a state 1403, the content processing module 180 may to output the content 1410 as a content 1430, wherein a length of the content 1430 matches the width of the display module 140. During this operation, the content processing module 180 may arrange the content 1430 having the specified screen display ratio at the edge of the screen and output a content 1440 (for example, a content obtained by enlarging a specified area including a person object in the content 1410) generated based on at least part of the content 1410 to the remaining margin area 730. For example, the content processing module 180 may arrange the content 1440 obtained by enlarging portion of the content 1410 and combining the enlarged portion with the content 1430, as shown with respect to state 1403.

According to an embodiment, when the electronic device 100 is rotated from a vertical state into a horizontal state, as shown in a state 1405, the content processing module 180 may generate the content 1430 by scaling down the length of the content 1410 to match the width of the display module 1410. Next, the content processing module 180 may arrange the content 1430 at the edge of the screen and output information 1450. Information 1450 may include one or more of property information, analysis information, and situation information of the content 1410. Information 1450 may be output in the remaining margin area 730. For example, the content processing module 180 may output to the margin area 730 at least one information 1450 of file name information of the content 1410, content creation date information, content type information, content collection location information, and the data size of content. When the electronic device 100 is rotated from a horizontal state into a vertical state again, as shown in the state 1401, the content processing module 180 may output the content 1410 to the entire area of the display module 140.

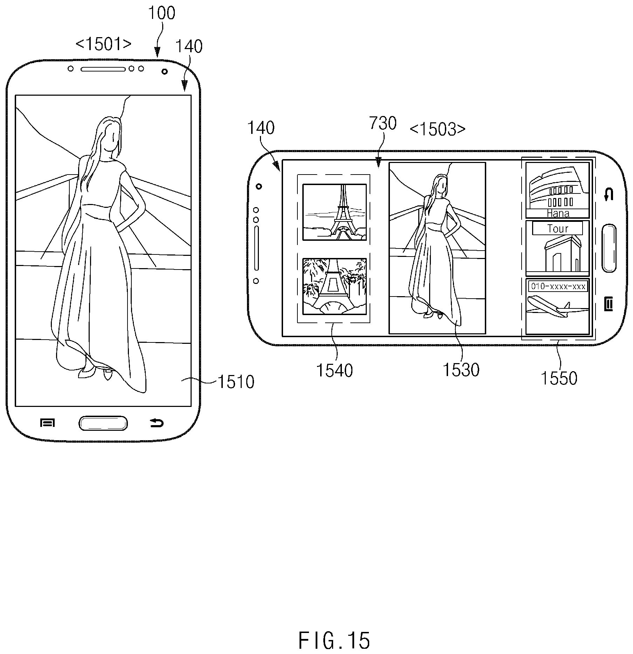

FIG. 15 is a diagram illustrating a situation information based content management according to an embodiment of the present disclosure.

Referring to FIG. 15, according to an embodiment, as shown in a state 1501, the content processing module 180 may output a content 1510 to the entire screen of the display module 140 in correspondence to the display ratio of the content 1510 when an electronic device 100 is disposed in a vertical state.

According to an embodiment, when the electronic device 100 is rotated from a vertical state into a horizontal state, as shown in a state 1503, the content processing module 180 may output a content 1530 (a content downsized according to the screen display ratio of the content 1510) to a partial area of the display module 140 in correspondence to a specified display ratio of the content 1510. The content processing module 180 may output contents 1540 and 1550 to a margin area 730 occurring according to the output of the content 1530. According to various embodiments, the content processing module 180 may output to one screen side of the display module 140 contents 1540 collected from a region substantially identical to a region where the content 1510 is collected. Herein, the contents 1540 may be at least one of contents obtained from the storage module 150 of the electronic device 100 and contents collected from the server 200 or an external electronic device.

According to various embodiments, the content processing module 180 may output advertisement information relating to a region where the content 1510 is collected as contents 1550 to one screen side of the display module 140. In this regard, the content processing module 180 may provide information of a region where the content 1510 is collected to the server 200 and may collect advertisement information or other multimedia content relating to corresponding region information.

Additionally or alternatively, the content processing module 180 may collect advertisement information collected from a region where the electronic device 100 is located at the time point of outputting the content 1510 as the contents 1550 and output the collected advertisement information to one screen side of the display module 140. In relation to this, the content processing module 180 may activate a WiFi direct communication module included in the communication interface 110 at the time point of outputting the content 1530 and may collect surrounding advertisement information provided through a WiFi direct communication method as the contents 1550.

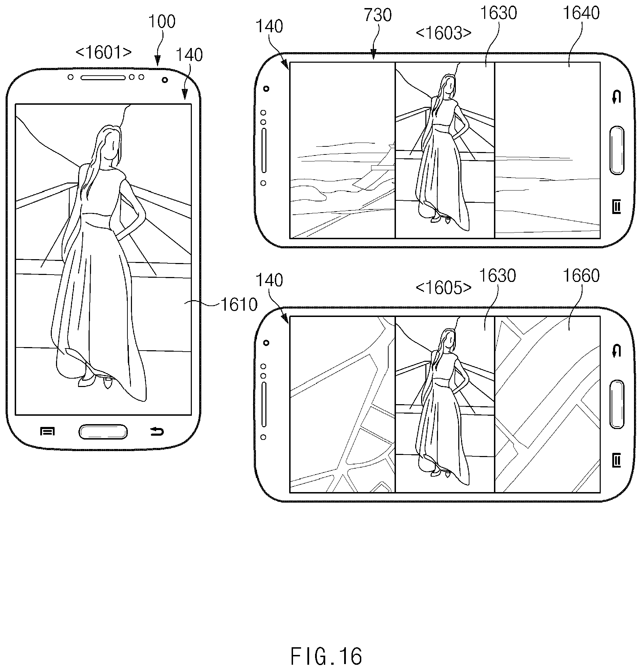

FIG. 16 is a diagram illustrating a related content management according to an embodiment of the present disclosure.

Referring to FIG. 16, according to an embodiment, as shown in a state 1601, the content processing module 180 may output a content 1610 on the entire screen of a display module 140 in correspondence to the display ratio of the content 1610 when an electronic device 100 is in a vertical state.

According to an embodiment, when the electronic device 100 is rotated from a vertical state into a horizontal state, as shown in a state 1603, the content processing module 180 may output the content 1630 to a portion of the display module 140 in correspondence to a specified display ratio of the content 1610. For example, the content processing module 180 may arrange the content 1630 at the center of the display module 140. The content processing module 180 may output a content 1640 to a margin area 730 occurring according to the output of the content 1630.

For example, the content processing module 180 may output at least part of the content 1640 (for example, a content obtained from the same region as the content 1630) relating to the content 1630. For example, the content processing module 180 may extract part of a specific content and perform blur-processing on the extracted part, thereby outputting it as a background to the content 1630.

According to various embodiments, the content processing module 180 may arrange the content 1630 at the center of the display module 140 as shown in a state 1605. In addition, in response to it being rotated, the electronic device may execute a predetermined function. As a result of executing the predetermined function, the electronic device 100 may generate a function content 1660. Afterwards, the electronic device may output the function content 1660 (for example, a content according to an execution of a function for providing map information on a region where the content 1630 is obtained or a content relating to a map information providing function of a region where the electronic device 100 is located at the time point of outputting the content 1630) relating to the content 1630. During this operation, the content processing module 180 may execute blur-processing on the function content 1660, thereby outputting it as a background content of the content 1630.

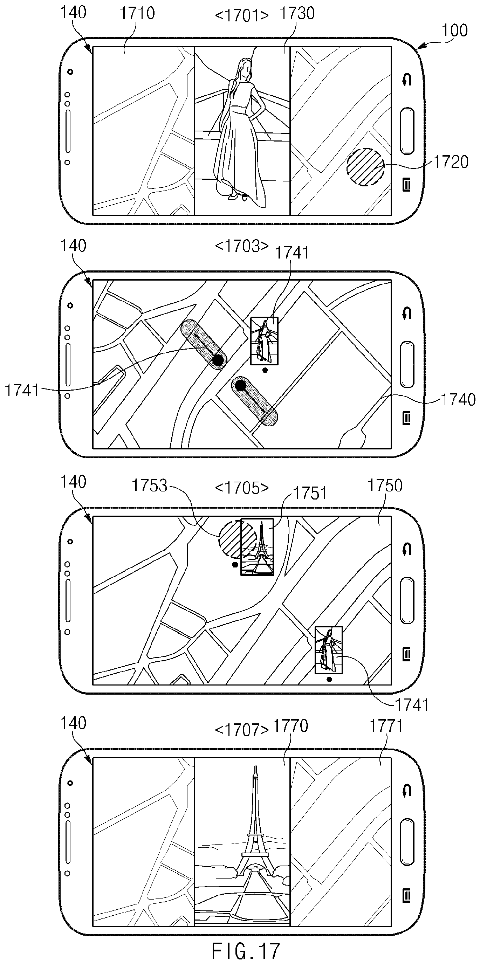

FIG. 17 is a diagram illustrating an event application of a related content according to an embodiment of the present disclosure.

According to various embodiments, the content processing module 180 may arrange a content 1730 at the center of the display module 140 as shown in a state 1701 and may also output a function content 1710 relating to the content 1730. The function content 1710 may include a map of a region where the content 1730 is obtained or a map of a region where the electronic device is located at the time of outputting the content 1730).

The content processing module 180 may receive an input event 1720 for selecting the function content 1710 in the state 1701. The content processing module 180 may output a map to the display module 140 in correspondence to the selection of the function content 1710 as shown in a state 1703. During this operation, the content processing module 180 may convert the content 1730 into a thumbnail image 1741 or an icon and may arrange it at a specified location on the map 1740. The location at which the thumbnail image 1741 is outputted on the map 1740 may be at least one of location where the content 1730 is obtained and location of the electronic device 100 when the content 1730 is outputted to the display module 140 of the electronic device 100.

In a state 1703, the content processing module 180 may receive a map reduction input event 1743 for reducing the scale of the map 1740 or a region included in the map 1740. For example, the content processing module 180 may receive a long touch event, a pinch zoom/out event, and a specific gesture event. When the map reduction input event 1743 occurs, the content processing module 180 may output reduction map 1750 having a lower scale than the map 1740, as shown in a state 1705 (for example, a larger range of a region is displayed on a fixed screen with a greater size ratio and accordingly more region information is included). When there is a thumbnail image 1751 relating to a specified point of the reduction map 1750, the content processing module 180 may output the thumbnail image 1751 on the reduction map 1750. For example, the thumbnail image 1751 may correspond to a content (for example, a picture, a file received from another electronic device, and a file received from a server device) obtained from a corresponding location on the reduction map 1750.

According to various embodiments, the content processing module 180 may receive a selection input event 1753 for selecting the thumbnail image 1751 in the state 1705. When the selection input event 1753 occurs, the content processing module 180 may output a content 1770 corresponding to the thumbnail image 1751 to the display module 140 as shown in a state 1707. During this operation, the content processing module 180 may output the function content 1710 relating to the content 1770 as a background content of the content 1770.

According to various embodiments, when the electronic device 100 is rotated from the horizontal state into the vertical state in a state 1707, the content processing module 180 may change the content 1770 into a content outputted to the entire display module 140.

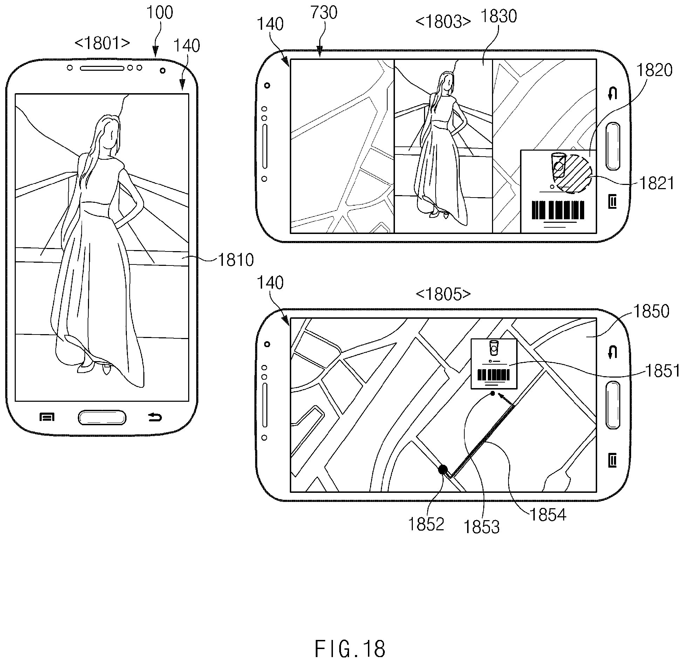

FIG. 18 is a diagram illustrating a link item based content application according to an embodiment of the present disclosure.

Referring to FIG. 18, according to an embodiment, the content processing module 180 may output a content 1810 to a display module 140 in correspondence to the screen display ratio (for example, a display ratio displayed on the entire screen in the vertical arrangement state of the electronic device 100) of the content 1810 as shown in a state 1801.

According to an embodiment, when the electronic device 100 changes from a vertical state into a horizontal state, as shown in a state 1803, the content processing module 180 may change the content 1810 into a content 1830 outputted to a partial area of the display module 140 in correspondence to a specified display ratio of the content 1810. For example, the content processing module 180 may arrange the content 1830 at the center of the display module 140. For example, the content processing module 180 may output at least part of a specific function content 1810 (for example, an image relating to a function set to be executed when the content 1830 is outputted) to a margin area 730 occurring according to the output of the content 1830. For example, the content processing module 180 may extract at least part of an execution screen of the specific function content 1810, thereby outputting it as a background screen of the content 1830 or perform blur-processing on the extracted part, thereby outputting it as a background content of the content 1830. During this operation, the content processing module 180 may output an advertisement 1820 to the display module 140.

According to various embodiments, the advertisement 1820 may be an advertisement broadcasted within a specified area on the basis of the location of the electronic device 100 when the content 1830 is outputted. The electronic device 100 may automatically activate the communication interface 110 in relation to the reception of the advertisement 1820. For example, in response to a margin area becoming more than a specified size in the display module 140, the electronic device 100 may automatically activate the communication interface 110 and retrieve the advertisement 1820 from a remote source.

According to an embodiment, when a margin area is greater than a specified size, the content processing module 180 may access the specific server 200 and provide its current location . The content processing module 180 may receive advertisement information that is selected on the basis of the current location by the server 200. According to various embodiments, the content processing module 180 may activate at least one of a short range wireless communication module and a direct wireless communication module and may receive advertisement information provided in a broadcast format. The content processing module 180 may output specified advertisement information in the received advertisement information as the advertisement 1820. For example, the content processing module 180 may output coupon advertisement as the advertisement 1820. The advertisement 1820 may be selected for display based on current time. For example, in the early morning, the content processing module 180 may output coffee related advertisement information as the advertisement 1820. Similarly, in the late evening, the content processing module may output alcohol or accommodation related advertisement information as the advertisement 1820. According to various embodiments, the content processing module 180 may output a plurality of advertisements 1820 on a screen where a specific function content 1810 is outputted. The electronic device 100 may store policy information on an advertisement category to be outputted by each time slot and the content processing module 180 may determine which advertisement is to be outputted during the current situation (for example, the current location, the current time, and the current weather) on the basis of the policy information. The policy information may be provided by the server 200 or provided by the manufacturer of the electronic device 100, or provided or changed by a provider device providing advertisement information or a user setting.

When an input event 1821 for selecting the advertisement 1820 outputted on the function content 1810, the content processing module 180 may activate a function linked to the function content 1810, for example, a map information view function. The content processing module 180 may output map information 1850 corresponding to the executed map information view function as shown in a state 1805. During this operation, the content processing module 180 may output on the map information 1850 path information 1854 between point information 1853 relating to the selected advertisement 1820 and the current location 1852. When the advertisement 1820 is a coupon advertisement, the content processing module 180 may output it as a coupon image 1851 to the display module 140. According to various embodiments, the content processing module 180 may output the advertisement 1820 as a background screen or a standby screen image of the electronic device 100 temporarily or semi-permanently.

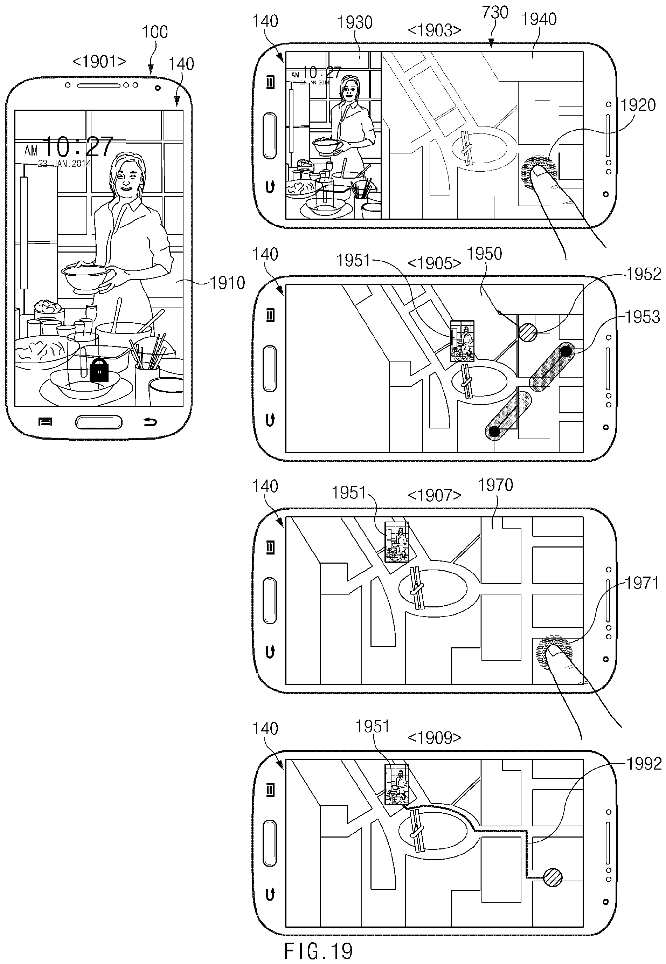

FIG. 19 is a diagram illustrating a location based content management according to an embodiment of the present disclosure.

Referring to FIG. 19, according to an embodiment, the content processing module 180 may output a content 1910 to a display module 140 as shown in a state 1901. During this operation, the content processing module 180 may output the content 1910 to the display module 140 without a margin area in correspondence to a screen display ratio specified for the content 1910.

According to an embodiment, when the electronic device 100 is rotated from a vertical state into a horizontal state, as shown in a state 1903, the content processing module 180 may change the content 1910 into a content 1930 outputted to a partial area of the display module 140 in correspondence to a specified display ratio of the content 1910. As the content 1910 is changed into the content 1930 and the content 1930 is displayed, a margin area 730 may form. The content processing module 180 may bias the content 1930 towards one of the right or left edge of the display module 140. As illustrated with respect to state 1903, the content 1930 may be displayed near the left edge.

The content processing module 180 may output at least part of a specific function content 1940 to a margin area generated in correspondence to the output of the content 1930. For example, the content processing module 180 may activate a map information view function relating to a location of the device 100 when the content 1930 is outputted to the display module 140. The content processing module 180 may extract at least part of a screen according to a map information view function execution, thereby outputting the extracted at least part to the margin area 730. Additionally or alternatively, the content processing module 180 may perform blur-processing on at least part of a function execution screen and then output it to the margin area 730 in relation to providing a noticeable effect. For example, the specific function content 1940 may include link information for activating a map information view function.

In a state 1903, when an input event 1920 for selecting the specific function content 1940 is received, the content processing module 180 may output a map information view function execution screen to the entire or part of the display module 140 as shown in a state 1905. The content processing module 180 may output a thumbnail image 1951 corresponding to the content 1930 to a point corresponding to the current location.

When receiving an event 1952 relating to a map search (for example, a drag event for changing an area of a map outputted to the display module 140) or a map enlargement input event 1953 (for example, a pinch zoom/out event) as shown in a state 1905, the content processing module 180 may output expanded map information 1970 on the basis of a specific point as shown in a state 1907. When receiving a point selection input event 1971 for selecting a specific point in the state 1907, the content processing module 180 may output path information 1992 from the current location (for example, a location displayed as the thumbnail image 1951) to a specific point 1991 (for example, a point of the touch event 1971 received in the state 1907) as shown in a state 1909.

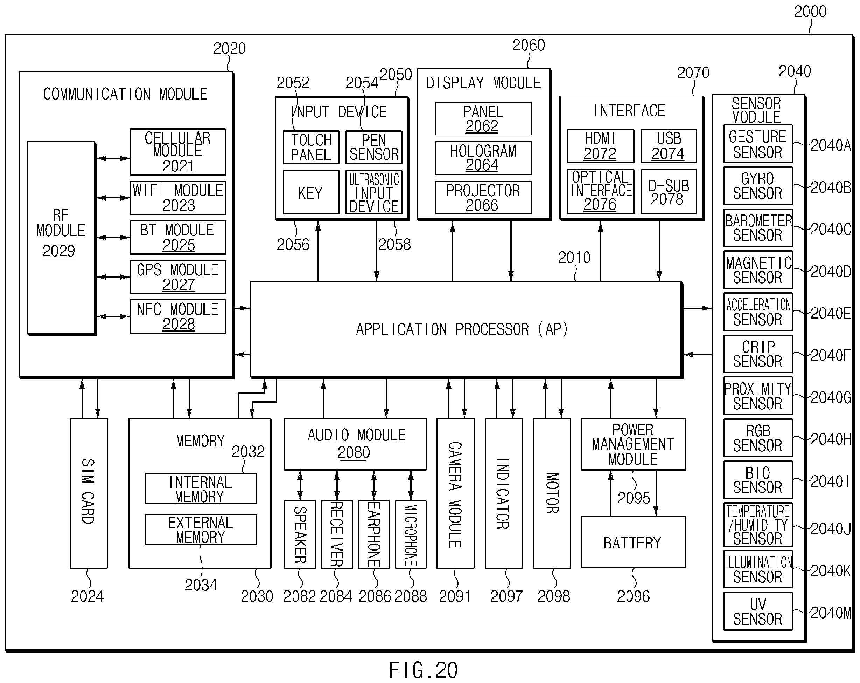

FIG. 20 is a block diagram of an example of an electronic device according to another embodiment of the present disclosure.

Referring to FIG. 20, an electronic device 2000, for example, may configure all or part of the above-mentioned electronic device 100 shown in FIG. 1. Referring to FIG. 20, the electronic device 2000 includes at least one application processor

(AP) 2010 (for example, the control module 160 of FIG.1), a communication module 2020 (for example, the communication interface 110 of FIG.1), a subscriber identification module (SIM) card 2024, a memory 2030 (for example, the storage module 150 of FIG.. 1), a sensor module 2040 (for example, the sensor module 190 of FIG. 1), an input device 2050 (for example, the input module 120 of FIG.1), a display 2060 (for example, the display module 140 of FIG. 1), an interface 2070, an audio module 2080 (for example, the audio module 130 of FIG. 1), a camera module 2091, a power management module 2095, a battery 2096, an indicator 2097, and a motor 2098.

The AP 2010 may control a plurality of hardware or software components connected to the AP 2010 and also may perform various data processing and operations with multimedia data by executing an operating system or an application program. The AP 2010 may be implemented with a system on chip (SoC), for example. According to an embodiment, the AP 2010 may further include a graphic processing unit (GPU) (not shown).

According to an embodiment, various modules AP 2010 relating to a function for modifying and outputting content or outputting another content according to the above-mentioned output state or output condition (or the display condition, the screen display ratio, or the margin area occurrence) may be implemented in the AP 2010. The AP 2010 may check the content condition of content by controlling related modules, output at least one of a generated content (for example, a content generated based on at least some information in screen component of a content to be outputted) or a related content (for example, another content of which file information describing a content to be outputted is similar or substantially identical, another content together stored in a storage group where content is stored, and a content found by file information describing the content) according to the content condition, and control outputted content related function processing.

According to an embodiment, various modules relating to a content output may be separately arranged in at least one of a Communication Processor (CP) and an AP. During this operation, modules that a CP controls may be disposed to be allowed for direct communication with the CP in the same chipset or hardware may be configured to allow the modules to connect to the CP through an external interface.

According to an embodiment, various modules relating to content output processing may be arranged in a CP. The control of related modules may be performed by a CP. In this case, a CP, WiFi, a sensor hub, and a GPS module may be connected to each other to be allowed for direct communication. In relation to this, each of components is connected through a system bus in the same chipset, so that even when an AP is in a power saving mode, the components may be connected to communicate with each other. When components are configured with different chipsets, they are connected through an external interface, so that hardware may be configured to allow the components to be available for direct communication without passing through an AP.

The communication module 2020 may perform data transmission in a communication between the electronic device 2000 (for example, the electronic device 100) and other electronic devices connected thereto through a network. The communication module 2020 may establish a communication channel and may receive a related content from the server 200. Additionally, the communication module 2020 may establish a communication channel with an external device (for example, the first external electronic device 101 or 102 of FIG. 2). The communication module 2020 may receive a related content from an external device. According to an embodiment, the communication module 2020 may include a cellular module 2021, a Wifi module 2023, a BT module 2025, a GPS module 2027, an NFC module 2028, and a radio frequency (RF) module 2029.

The cellular module 2021 may provide voice calls, video calls, text services, or internet services through a communication network (for example, LTE, LTE-A, CDMA, WCDMA, UMTS, WiBro, or GSM). The cellular module 2021 may identify and authenticate an electronic device in a communication network by using a subscriber identification module (for example, the SIM card 2024), for example. According to an embodiment, the cellular module 2021 may perform at least part of a function that the AP 2010 provides. For example, the cellular module 2021 may perform at least part of a multimedia control function.

According to an embodiment, the cellular module 2021 may include a communication processor (CP). Additionally, the cellular module 2021 may be implemented with SoC, for example. As shown in FIG. 20, components such as the cellular module 2021 (for example, a CP), the memory 2030, or the power management module 2095 are separated from the AP 2010, but according to an embodiment, the AP 2010 may be implemented including some of the above-mentioned components (for example, the cellular module 2021).

According to an embodiment, the AP 2010 or the cellular module 2021 (for example, a CP) may load instructions or data, which are received from a nonvolatile memory or at least one of other components connected thereto, into a volatile memory and then may process the instructions or data. Furthermore, the AP 2010 or the cellular module 2021 may store data received from or generated by at least one of other components in a nonvolatile memory.

According to various embodiments, the cellular module 2021 may be included in the communication interface 110 described with reference to FIG. 1. The cellular module 2021 may transmit search information (at least one of content related property information, analysis information, situation information, and user input information) to the server 200 or an external electronic device 101 or 102. Additionally or alternatively, the cellular module 2021 may receive a related content corresponding to the search information from the server 200 or an external device. According to various embodiments, the cellular module 2021 may receive advertisement information from the server 200 or an external device.

Each of the Wifi module 2023, the BT module 2025, the GPS module 2027, and the NFC module 2028 may include a processor for processing data transmitted/received through a corresponding module. The Wifi module 2023 and the BT module 2025 may be included in at least one of the communication interface 110 and the sub communication module 230. The GPS module 2027 may be included in the communication interface 110.

Although the cellular module 2021, the Wifi module 2023, the BT module 2025, the GPS module 2027, and the NFC module 2028 are shown as separate blocks in FIG. 20, according to an embodiment, some (for example, at least two) of the cellular module 2021, the Wifi module 2023, the BT module 2025, the GPS module 2027, and the NFC module 2028 may be included in one integrated chip (IC) or an IC package. For example, at least some (for example, a CP corresponding to the cellular module 2021 and a Wifi processor corresponding to the Wifi module 2023) among processors respectively corresponding to the cellular module 2025, the Wifi module 2027, the BT module 2028, the GPS module 2021, and the NFC module 2023 may be implemented with a single SoC.

According to various embodiments, the Wifi module 2023 may be included in the communication interface 110 described with reference to FIG. 1. The Wifi module 2023 may establish a direction communication channel with the external device 200. The Wifi module 2023 may receive advertisement information provided from the external device 200. According to various embodiments, the Wifi module 2023 may transmit search information to the server 200 and an external device and may receive a related content corresponding to the search information.

The RF module 2029 may be responsible for data transmission/reception, for example, the transmission/reception of an RF signal. Although not shown in the drawings, the RF module 2029 may include a transceiver, a power amp module (PAM), a frequency filter, or a low noise amplifier (LNA). Additionally, the RF module 2029 may further include components for transmitting/receiving electromagnetic waves in a free space as a wireless communication, for example, conductors or conducting wires. Although the cellular module 2021, the Wifi module 2023, the BT module 2025, the GPS module 2027, and the NFC module 2028 share one RF module 2029 shown in FIG. 20, according to an embodiment, at least one of the cellular module 2021, the Wifi module 2023, the BT module 2025, the GPS module 2027, and the NFC module 2028 may perform the transmission of an RF signal through an additional RF module.

The SIM card 2024 may be a card including a subscriber identification module and may be inserted into a slot formed at a specific location of an electronic device. The SIM card 2024 may include unique identification information (for example, an integrated circuit card identifier (ICCID)) or subscriber information (for example, an international mobile subscriber identity (IMSI)). According to an embodiment, the SIM card 2024 may be part of the memory device 200. When the SIM card 2024 is inserted into a slot, the AP 2010 may perform an initialization process of the SIM card 2024.

The memory 2030 (for example, the storage module 150) may include an internal memory 2032 or an external memory 2034. The internal memory 2032 may include at least one of a volatile memory (for example, dynamic random access memory (DRAM), static RAM (SRAM), synchronous dynamic RAM (SDRAM)) and a non-volatile memory (for example, one time programmable read only memory (OTPROM), programmable ROM (PROM), erasable and programmable ROM (EPROM), electrically erasable and programmable ROM (EEPROM), mask ROM, flash ROM, Not AND (NAND) flash memory, and Not OR (NOR) flash memory). According to an embodiment, the internal memory 2032 may be a Solid State Drive (SSD).

The external memory 2034 may further include flash drive, for example, compact flash (CF), secure digital (SD), micro secure digital (Micro-SD), mini secure digital (Mini-SD), extreme digital (xD), or a memory stick. The external memory 2034 may be functionally connected to the electronic device 2000 through various interfaces. According to an embodiment, the electronic device 2000 may further include a storage device (or a storage medium) such as a hard drive.

According to various embodiments, the memory 2030 may store a generated content generated from at least one of a basic content outputted to the electronic device 2000 and a screen component of the basic content. The memory 2030 may store at least one related content collected by using information (for example, at least one of property information, analysis information, situation information, and user input information) relating to a basic content.

The sensor module 2040 measures physical quantities or detects an operating state of the electronic device 2000, thereby converting the measured or detected information into electrical signals. The sensor module 2040 may include at least one of a gesture sensor 2040A, a gyro sensor 2040B, a pressure sensor 2040C, a magnetic sensor 2040D, an acceleration sensor 2040E, a grip sensor 2040F, a proximity sensor 2040G, a color sensor 2040H (for example, a red, green, blue (RGB) sensor), a bio sensor 20401, a temperature/humidity sensor 2040J, an illumination sensor 2040K, and an ultra violet (UV) sensor 2040M. Additionally/alternately, the sensor module 2040 may include an E-nose sensor (not shown), an electromyography (EMG) sensor, an electroencephalogram (EEG) sensor (not shown), an electrocardiogram (ECG) sensor (not shown), an infra red (IR) sensor (not shown), an iris sensor (not shown), or a fingerprint sensor (not shown). The sensor module 2040 may further include a control circuit for controlling at least one sensor therein.

According to various embodiments, the sensor module 2040 may collect a sensor signal relating to an operation of the electronic device 2000 and a sensor signal relating to a surrounding situation. The sensor signals collected by the sensor module 2040 may be delivered to the AP 2010. The AP 2010 may process the delivered signal signals as context information. The sensor module 2040 may collect a sensor signal for determining a horizontal state arrangement state or a vertical arrangement state of the electronic device 2000. When an output condition satisfies a specified condition, at least one sensor included in the sensor module 2040 may be activated automatically.

The user input device 2050 may include a touch panel 2052, a (digital) pen sensor 2054, a key 2056, or an ultrasonic input device 2058. The input device 2050 may include the input module 1210 descried with reference to FIG. 1.

The touch panel 2052 may recognize a touch input through at least one of capacitive, resistive, infrared, or ultrasonic methods, for example. Additionally, the touch panel 2052 may further include a control circuit. In the case of the capacitive method, both direct touch and proximity recognition are possible. The touch panel 2052 may further include a tactile layer. In this case, the touch panel 2052 may provide a tactile response to a user. The touch panel 2052 may generate a touch event (for example, a touch event relating to a movement of an outputted content and the output of another content, and the screen enlargement or downsize of an outputted content) relating to an output control of a specific content in correspondence to a user touch. The touch panel 2052 may generate a touch event (for example, a tap event or a long touch event) relating to a function execution linked to a specific content in correspondence to a user touch.

The (digital) pen sensor 2054 may be implemented through a method similar or substantially identical to that of receiving a user's touch input or an additional sheet for recognition. The key 2056 may include a physical button, a touch key, an optical key, or a keypad, for example. The ultrasonic input device 2058, as a device checking data by detecting sound waves through a mic (for example, the mic 2088) in the electronic device 2000, may provide wireless recognition through an input tool generating ultrasonic signals. According to an embodiment, the electronic device 2000 may receive a user input from an external device (for example, a computer or a server) connected to the electronic device 1801 through the communication module 2020.

The display 2060 (for example, the display module 140) may include a panel 2062, a hologram device 2064, or a projector 2066. The panel 2062 may include a liquid-crystal display (LCD) or an active-matrix organic light-emitting diode (AM-OLED). The panel 2062 may be implemented to be flexible, transparent, or wearable, for example. The panel 2062 and the touch panel 2052 may be configured with one module. The hologram 2064 may show three-dimensional images in the air by using the interference of light. The projector 2066 may display an image by projecting light on a screen. The screen, for example, may be placed inside or outside the electronic device 2000. According to an embodiment, the display 2060 may further include a control circuit for controlling the panel 2062, the hologram device 2064, or the projector 2066.

The interface 2070 may include an HDMI 2072, a universal serial bus (USB) 2074, an optical interface 2076, or a D-subminiature (D-sub) 2078, for example. Additionally/alternately, the interface 2070 may include a mobile high-definition link (MHL) interface, an SD card/multi-media card (MMC) interface, or an infrared data association (IrDA) standard interface.

The audio module 2080 (for example, the audio module 130 of FIG. 1) may convert sound into electrical signals convert electrical signals into sound. The audio module 2080 may process sound information inputted/outputted through a speaker 2082, a receiver 2084, an earphone 2086, or a mic 2088. According to an embodiment, the audio module 2080 may output a guide sound relating to a content change, a guide sound relating to audio data, a generated content output, or a related content collection and output, or audio data.

The camera module 2091 capturing a still image and a video may include at least one image sensor (for example, a front sensor or a rear sensor), a lens (not shown), an image signal processor (ISP) (not shown), or a flash (not shown) (for example, an LED or a xenon lamp). Pictures captured by the camera module 2091 may be used as a basic content described with reference to FIG. 1.

The power management module 2095 may manage the power of the electronic device 2000. According to an embodiment, the power management module 2095 may control power supply of at least one device component of the electronic device 2000. For example, when the battery power of the electronic device 2000 is less than a setting value, the power management module 2095 may cut off power supply to specific device components (for example, the sensor module 190, a communication module, and a GPS module). Although not shown in the drawings, the power management module 2095 may include a power management IC (PMIC), a charger IC, or a battery or fuel gauge, for example.

The PMIC may be built in an IC or SoC semiconductor, for example. A charging method may be classified into a wired method and a wireless method. The charger IC may charge a battery and may prevent overvoltage or overcurrent flow from a charger. According to an embodiment, the charger IC may include a charger IC for at least one of a wired charging method and a wireless charging method. As the wireless charging method, for example, there is a magnetic resonance method, a magnetic induction method, or an electromagnetic method. An additional circuit for wireless charging, for example, a circuit such as a coil loop, a resonant circuit, or a rectifier circuit, may be added.

The battery gauge may measure the remaining amount of the battery 2096, or a voltage, current, or temperature of the battery 2096 during charging. The battery 2096 may store or generate electricity and may supply power to the electronic device 2000 by using the stored or generated electricity. The battery 2096, for example, may include a rechargeable battery or a solar battery.

The indicator 2097 may display a specific state of the electronic device 2000 or part thereof (for example, the AP 2010), for example, a booting state, a message state, or a charging state. According to an embodiment, the indicator 2097 may display an indicator relating to a setting state of a specific content output mode according to a content output condition and a related content collection state. The motor 2098 may convert electrical signals into mechanical vibration. Although not shown in the drawings, the electronic device 2000 may include a processing device (for example, a GPU) for mobile television (TV) support. A processing device for mobile TV support may process media data according to the standards such as digital multimedia broadcasting (DMB), digital video broadcasting (DVB), or media flow.

As mentioned above, in relation to a content management method and an electronic device supporting the same according to various embodiments, the various embodiments may maximize the utilization of at least one margin area of a margin area occurring due to a display ratio difference between the screen display ratio of content and the display ratio of a display module and a margin area occurring according to a display direction of a display module or characteristics of content.

Additionally, various embodiments may support content related various information acquisition and utilization by automatically providing a content (at least one of a generated content generated based on at least part of a displayed content, a related content relating to a displayed content, and a related content relating to an electronic device displaying content) relating to a content displayed on a display module.

Additionally, various embodiments may support to more easily and intuitively perform a function management specified to at least one of a related content and a generated content according to a related content selection and management.

An electronic device according to the present disclosure may be configured including at least one of the above-mentioned components or another component, or not including some of the above-mentioned components. Additionally, some components of an electronic device according to the present disclosure are combined and configured as one entity, so that functions of previous corresponding components are performed identically.

The term "module" used in this disclosure, for example, may mean a unit including a combination of at least one of hardware, software, and firmware. The term "module" and the term "unit", "logic", "logical block", "component", or "circuit" may be interchangeably used. A "Module" may be a minimum unit or part of an integrally configured component, may be a minimum unit performing at least one function or part thereof, or may be implemented mechanically or electronically. For example, the module according to various embodiments of the present disclosure may include at least one of an application-specific IC (ASIC) chip performing certain operations, field-programmable gate arrays (FPGAs), or a programmable-logic device, all of which are known or to be developed in the future.

According to various embodiments, at least part of a device (for example, modules or functions thereof) or a method (for example, operations) according to this disclosure, for example, as in a form of a programming module, may be implemented using an instruction stored in either transitory or non-transitory computer-readable storage media. When at least one processor executes an instruction, it may perform a function corresponding to the instruction. The non-transitory computer-readable storage media may be the memory, for example. At least part of the programming module may be implemented (for example, executed) by the processor, for example. At least part of a programming module may include a module, a program, a routine, sets of instructions, or a process to perform at least one function, for example.

The non-transitory computer-readable storage media may include Magnetic Media such as a hard disk, a floppy disk, and a magnetic tape, Optical Media such as Compact Disc ROM (CD-ROM) and Digital Versatile Disc (DVD), Magneto-Optical Media such as Floptical Disk, and a hardware device especially configured to store and perform a program instruction (for example, a programming module) such as ROM, RAM, and flash memory. Additionally, a program instruction may include high-level language code executable by a computer using an interpreter in addition to machine code created by a complier. The hardware device may be configured to operate as at least one software module to perform an operation of this disclosure and vice versa.

According to various embodiments, a computer recording medium may include an instruction executed based on at least one processor and the instruction may be set to perform checking an output condition of a content to be outputted or outputted to a display module, checking whether the output condition satisfies the specified condition, and outputting to the display module at least one of a generated content generated based on at least part of content information and a related content relating to the content information when the specified condition is satisfied.

A module or a programming module according to the present disclosure may include at least one of the above-mentioned components or additional other components, may not include some of the above-mentioned components, or may further include another component. Operations performed by a programming module or other components according to the present disclosure may be executed through a sequential, parallel, repetitive or heuristic method. Additionally, some operations may be executed in a different order or may be omitted. Additionally or alternatively, other operations may be added.

The term "include," "comprise," and "have", or "may include," or "may comprise" and "may have" used in various embodiments indicates disclosed functions, operations, or existence of elements but does not exclude other functions, operations or elements. Additionally, according to various embodiments, the meaning of "include," "comprise," "including," or "comprising," specifies a property, a region, a fixed number, a step, a process, an element and/or a component but does not exclude other properties, regions, fixed numbers, steps, processes, elements and/or components.

According to various embodiments, the meaning of the term "or" used herein includes any or all combinations of the words connected by the term "or". For instance, the expression "A or B" may indicate include A, B, or both A and B.

According various embodiments, the terms such as "1st", "2nd", "first", "second", and the like used herein may refer to modifying various different elements of various embodiments, but do not limit the elements. For instance, such terms do not limit the order and/or priority of the elements. Furthermore, such terms may be used to distinguish one element from another element. For example, a first component may be referred to as a second component and vice versa without departing from the scope of the present disclosure.

In this disclosure below, when one part (or element, device, etc.) is referred to as being 'connected' to another part (or element, device, etc.), it should be understood that the former can be 'directly connected' to the latter, or 'electrically connected to the latter via an intervening part (or element, device, etc.). In contrast, when an element is referred to as being "directly connected" or "directly coupled" to another element, there are no intervening elements present.

Terms used in various embodiments are used to describe specific embodiments, and are not intended to limit the scope of the present disclosure. The terms of a singular form may include plural forms unless they have a clearly different meaning in the context.

Unless otherwise defined herein, all the terms used herein, which include technical or scientific terms, may have the same meaning that is generally understood by a person skilled in the art. It will be further understood that terms, which are defined in the dictionary and in commonly used, should also be interpreted as is customary in the relevant related art and not in an idealized or overly formal sense unless expressly so defined herein in various embodiments.

Additionally, an electronic device according to various embodiments may be a device supporting content output. For instance, electronic devices may include at least one of smartphones, tablet personal computers (PCs), mobile phones, video phones, electronic book (e-book) readers, desktop PCs, laptop PCs, netbook computers, personal digital assistants (PDAs), portable multimedia player (PMPs), digital audio players, mobile medical devices, cameras, and wearable devices (e.g., head-mounted-devices (HMDs) such as electronic glasses, electronic apparel, electronic bracelets, electronic necklaces, electronic accessories, electronic tattoos, and smart watches).

According to some embodiments, an electronic device may be a smart home appliance supporting content output. The smart home appliances may include at least one of, for example, televisions, digital video disk (DVD) players , audios, refrigerators, air conditioners, cleaners, ovens, microwave ovens, washing machines, air cleaners, set-top boxes, TV boxes (e.g., Samsung HomeSyncTM, Apple TVTM or Google TVTM), game consoles, electronic dictionaries, electronic keys, camcorders, and electronic picture frames.

According to some embodiments, an electronic device may include at least one of various medical devices (for example, magnetic resonance angiography (MRA) devices, magnetic resonance imaging (MRI) devices, computed tomography (CT) devices, medical imaging devices, ultrasonic devices, etc.), navigation devices, global positioning system (GPS) receivers, event data recorders (EDRs), flight data recorders (FDRs), vehicle infotainment devices, marine electronic equipment (for example, marine navigation systems, gyro compasses, etc.), avionics, security equipment, vehicle head modules, industrial or household robots, financial institutions' automatic teller's machines (ATMs), and stores' point of sales (POS).

According to some embodiments, an electronic device may include at least one of furniture or buildings/structures supporting content output processing, electronic boards, electronic signature receiving devices, projectors, or various measuring instruments (for example, water, electricity, gas, or radio signal measuring instruments). An electronic device according to various embodiments may be one of the above-mentioned various devices or a combination thereof. Additionally, an electronic device according to the present disclosure may be a flexible device. Furthermore, it is apparent to those skilled in the art that an electronic device according to various embodiments is not limited to the above-mentioned devices.

Also, embodiments of the present disclosure disclosed in this specification and drawings are provided as specific examples to describe technical content and help understanding and also do not limit the scope of the present disclosure. Accordingly, it should be translated that besides the embodiments listed herein, all modifications or modified forms derived based on the technical ideas of the present disclosure are included in the scope of the present disclosure.

FIGS. 1-24 are provided as an example only. At least some of the steps discussed with respect to these figures can be performed concurrently, performed in a different order, and/or altogether omitted. The above-described aspects of the present disclosure can be implemented in hardware, firmware or via the execution of software or computer code that can be stored in a recording medium such as a CD-ROM, a Digital Versatile Disc (DVD), a magnetic tape, a RAM, a floppy disk, a hard disk, or a magneto-optical disk or computer code downloaded over a network originally stored on a remote recording medium or a non-transitory machine-readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. Any of the functions and steps provided in the Figures may be implemented in hardware, software or a combination of both and may be performed in whole or in part within the programmed instructions of a computer.

While the present disclosure has been particularly shown and described with reference to the examples provided therein, it will be understood by those skilled in the art that various changes in form and details may be made therein without departing from the scope of the present disclosure as defined by the appended claims.

It will be appreciated that embodiments of the present invention can be realized in the form of hardware, software or a combination of hardware and software. Any such software may be stored in the form of volatile or non-volatile storage, for example a storage device like a ROM, whether erasable or rewritable or not, or in the form of memory, for example RAM, memory chips, device or integrated circuits or on an optically or magnetically readable medium, for example a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention.

Accordingly, embodiments provide a program comprising code for implementing apparatus or a method as claimed in any one of the claims of this specification and a machine-readable storage storing such a program. Still further, such programs may be conveyed electronically via any medium, for example a communication signal carried over a wired or wireless connection and embodiments suitably encompass the same.

Throughout the description and claims of this specification, the words "comprise" and "contain" and variations of the words, for example "comprising" and "comprises", means "including but not limited to", and is not intended to (and does not) exclude other components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

## Claims

1. An electronic device (100) comprising:
a memory (150) configured to store content (151);
a display module (140); and
a processor (160) configured to:
detect whether an event relating to an output of a first content (710) on the display module (140) occurs, the event being at least one of:
an event relating to the execution of a function requesting the output of the first content (710); or
a change in display direction of the first content (710) from a vertical state to a horizontal state or from a horizontal state to a vertical state;
the processor (160) further configured to:
detect an output characteristic of the first content, the output characteristic being at least one of a size of a margin area of the the first content, a display size of the first content, a location at which the first content is outputted, a color of the first content, or a count of objects included in the first content;
check whether the output characteristic of the first content satisfies a specified condition; and
when the output characteristic satisfies the specified condition, output on the display module (140) the first content (710) and a second content (711, 750, 770), the second content being one of a content generated based on at least part of the first content (710), content collected by using search information relating to the first content (710), or content relating to an output situation of the first content (710),
wherein the specified condition is at least one of:
a size of a margin area associated with the first content exceeding a specified size,
a display size of the first content being less than a specified output size,
a location at which the first content is outputted being limited to a specified location,
a color of the first content matching a specified color, or
a count of objects included in the first content being a specified number.

2. The electronic device of claim 1, wherein, when the second content is content generated based on at least part of the first content, the processor is further configured to generate the second content, the generating including at least one of:
extracting at least a portion of the first content;
modifying at least a portion of the first content; or
graphically overlaying an object extracted from the first content over another content, the another content being content stored together in a folder of the memory (150) within which the first content is stored or content stored with a category shared by the first content.

3. The electronic device of claim 1 or claim 2, wherein the processor is further configured to generate the second content, the generating including at least one of an enlarging or downsizing of the first content, or applying an extension of a display ratio to at least a portion of the first content.

4. The electronic device of any one of claims 1 to 3, wherein the second content includes at least one of:
content that matches the first content, the matching content being content associated with at least one of property information, analysis information, and situation information that corresponds to property information, analysis information, and/or situation information of the first content respectively,
content including at least a portion of the first content, and
content obtained based on situation information associated with the electronic device,
wherein analysis information is information generated by analyzing the first content; and
wherein situation information is one of:
time information for outputting the first content;
location information or region information of the electronic device when the first content is outputted;
weather information when the first content is outputted;
a sensor signal that a sensor module collects when the first content is outputted;
function management state information of the electronic device when the first content is outputted;
season information of a region where the electronic device is located; and
advertisement information provided from a region where the electronic device is located while the first content is outputted.

5. The electronic device of any one of claims 1 to 3, wherein the second content comprises at least one of:
a map of at least one of: (i) a location of the electronic device when the first content is output, or (ii) a location of the electronic device when output of the first content is requested, and
location-based content associated with at least one of (i) a location of the electronic device when the first content is output or (ii) a location of the electronic device when output of the first content is requested.

6. The electronic device of any one of claims 1, 4 or 5, wherein the processor is further configured to identify the second content, the identifying including at least one of
performing a search of a storage module for content that matches the first content, the content that matches the first content being content associated with at least one of property information, analysis information, and situation information that corresponds to the property information, analysis information, and/or situation information of the first content respectively; and
transmitting, to an external device, a search query and receiving the second content from the external device in response to the search query,
wherein analysis information is information generated by analyzing the first content;
wherein situation information is one of:
time information for outputting the first content;
location information or region information of the electronic device when the first content is outputted;
weather information when the first content is outputted;
a sensor signal that a sensor module collects when the first content is outputted;
function management state information of the electronic device when the first content is outputted;
season information of a region where the electronic device is located; and
advertisement information provided from a region where the electronic device is located while the first content is outputted.

7. The electronic device of claim 6, wherein the search query is based on at least one of the property information relating to the first content, the analysis information obtained by analyzing the first content, and the situation information of the electronic device.

8. The electronic device of any one of claims 1 to 7, **characterized in that**:
the first content is output for at least a specified time after the output characteristic is detected; and
the second content is output when the specified time elapses.

9. The electronic device of claim 1, wherein the processor is configured to
detect an input event; and execute a function for generating the second content in response to the input event.

10. A method of displaying content on an electronic device (100) according to claim 1, the method comprising:
detecting whether an event relating to an output of a first content (710) occurs, the event being at least one of:
an event relating to the execution of a function requesting the output of the first content (710); or
a change in display direction of the first content (710) from a vertical state to a horizontal state or from a horizontal state to a vertical state;
detecting an output characteristic of the first content, the characteristic being at least one of a size of a margin area associated with the first content, a display size of the first content, a location at which the first content is outputted, a color of the first content, or a count of objects included in the first content;
checking whether the output characteristic of the first content satisfies a specified condition; and
when the output characteristic satisfies the specified condition, outputting the first content (710) and a second content (711, 750, 770), the second content being one of a content generated based on at least part of the first content (710), a content collected by using search information relating to to the first content (710), or content relating to an output situation of the first content (710);
wherein the checking whether the output characteristic of the first content satisfies the specified condition comprises at least one of:
detecting whether a size of a margin area associated with the first content exceeds a specified size;
detecting whether a display size of the first content is less than a specified output size;
detecting whether the first content is displayed in a specified location;
detecting whether a color of the first content matches a specified color; or
detecting whether a count of objects included in the first content is a specified number.

11. The method of claim 10, comprising generating the second content, wherein generating the second content includes at least one of:
extracting at least a portion of the first content;
modifying at least a portion of the first content;
graphically overlaying an object extracted from the first content over another content, the another content being content stored together in a folder of the memory within which the first content is stored or content stored with a category shared by the first content;
enlarging or downsizing at least one object included in the first content; and
applying an extension of a display ratio to at least a portion of the first content.

12. The method of claim 10 or claim 11, wherein the second content includes at least one of:
content that matches the first content, the matching content being content associated with at least one of property information, analysis information, and situation information that corresponds to property information, analysis information, and/or situation information of the first content respectively;
content including at least a portion of the first content; or
content obtained based on situation information associated with the electronic device
wherein analysis information is information generated by analyzing the first content; and
wherein situation information is one of: time information for outputting the first content; location information or region information of the electronic device when the first content is outputted; weather information when the first content is outputted; a sensor signal that a sensor module collects when the first content is outputted; function management state information of the electronic device when the first content is outputted; season information of a region where the electronic device is located; and advertisement information provided from a region where the electronic device is located while the first content is outputted.

13. A computer program comprising instructions, which, when the program is executed by a processor, cause the processor to carry out the method of any one of claims 10 to 12.

## Patentansprüche

1. Elektronische Einheit (100), aufweisend:
einen Arbeitsspeicher (150), der konfiguriert ist, um Inhalt (151) zu speichern; ein Anzeigemodul (140);
und einen Prozessor (160), der konfiguriert ist zum:
Erkennen, ob ein Ereignis, das sich auf eine Ausgabe eines ersten Inhalts (710) bezieht, auf dem Anzeigemodul (140) auftritt, wobei das Ereignis mindestens eines ist entweder von:
einem Ereignis, das sich auf die Ausführung einer Funktion bezieht, die die Ausgabe des ersten Inhalts (710) anfordert;
oder eine Änderung einer Anzeigerichtung des ersten Inhalts (710) von einem vertikalen Zustand in einen horizontalen Zustand oder von einem horizontalen Zustand in einen vertikalen Zustand; wobei der Prozessor (160) ferner konfiguriert ist zum:
Erkennen eines Ausgabemerkmals des ersten Inhalts, wobei das Ausgabemerkmal mindestens eines von entweder einer Größe eines Randbereichs des ersten Inhalts, einer Anzeigegröße des ersten Inhalts, einer Position, an der der erste Inhalt ausgegeben wird, einer Farbe des ersten Inhalts oder einer Anzahl von Objekten ist, die in den ersten Inhalt enthalten sind;
Prüfen, ob das Ausgabemerkmal des ersten Inhalts eine bestimmte Bedingung erfüllt;
und wenn das Ausgabemerkmal die bestimmte Bedingung erfüllt, Ausgeben des ersten Inhalts (710) und eines zweiten Inhalts (711, 750, 770) auf dem Anzeigemodul (140), wobei der zweite Inhalt entweder ein Inhalt, der auf Grundlage von mindestens einem Teil des ersten Inhalts (710) generiert wurde, ein Inhalt, der unter Verwendung von Suchinformationen gesammelt wurde, die sich auf den ersten Inhalt (710) beziehen, oder ein Inhalt ist, der sich auf eine Ausgabesituation des ersten Inhalts (710) bezieht, wobei die angegebenen Bedingung mindestens eine ist von entweder:
einer Größe eines Randbereichs, der dem ersten Inhalt zugehörig ist, der eine angegebene Größe überschreitet,
einer Anzeigegröße des ersten Inhalts, die kleiner als eine angegebene Ausgabegröße ist,
einer Position, an der der erste Inhalt ausgegeben wird, der auf eine bestimmte Position beschränkt ist,
einer Farbe des ersten Inhalts, die mit einer angegebenen Farbe übereinstimmt, oder einer Anzahl von Objekten, die in dem ersten Inhalt enthalten sind, die eine bestimmte Anzahl ist.

2. Elektronische Einheit nach Anspruch 1, wobei, wenn der zweite Inhalt ein Inhalt ist, der auf Grundlage von mindestens einem Teil des ersten Inhalts generiert wurde, der Prozessor ferner konfiguriert ist zum Generieren des zweiten Inhalts, wobei das Generieren mindestens eines aufweist von entweder:
einem Extrahieren von mindestens einem Abschnitt des ersten Inhalts;
einem Modifizieren von mindestens einem Abschnitt des ersten Inhalts;
oder einem grafischen Überlagern eines Objekts, das aus dem ersten Inhalt extrahiert wurde, über einen anderen Inhalt, wobei der andere Inhalt ein Inhalt ist, der zusammen in einem Ordner des Arbeitsspeichers (150) gespeichert ist, in dem der erste Inhalt gespeichert ist, oder ein Inhalt, der mit einer Kategorie gespeichert ist, die gemeinsam mit dem ersten Inhalt genutzt wird.

3. Elektronische Einheit nach Anspruch 1 oder Anspruch 2, wobei der Prozessor ferner konfiguriert ist, um den zweiten Inhalt zu generieren, wobei das Generieren mindestens eines von entweder einem Vergrößern oder Verkleinern des ersten Inhalts oder einem Anwenden einer Erweiterung eines Anzeigeverhältnisses auf mindestens einen Abschnitt des ersten Inhalts enthält.

4. Elektronische Einheit nach einem der Ansprüche 1 bis 3, wobei der zweite Inhalt mindestens eines enthält von entweder:
Inhalt, der mit dem ersten Inhalt übereinstimmt, wobei der übereinstimmende Inhalt ein Inhalt ist, der mindestens einem von entweder Eigenschaftsinformationen, Analyseinformationen und Situationsinformationen, die jeweils Eigenschaftsinformationen, Analyseinformationen und/oder Situationsinformationen des ersten Inhalts entsprechen,
Inhalt, der mindestens einen Abschnitt des ersten Inhalts enthält und Inhalt, der auf Grundlage von der elektronischen Einheit zugehörigen Situationsinformationen erhalten wird, zugehörig ist, wobei die Analyseinformationen Informationen sind, die durch Analysieren des ersten Inhalts generiert wurden;
und wobei Situationsinformationen eines sind von entweder:
Zeitinformationen zum Ausgeben des ersten Inhalts;
Positionsinformationen oder Bereichsinformationen der elektronischen Einheit, wenn der erste Inhalt ausgegeben wird;
Wetterinformationen, wenn der erste Inhalt ausgegeben wird;
einem Sensorsignal, das ein Sensormodul sammelt, wenn der erste Inhalt ausgegeben wird; Funktionsverwaltungszustands-Information der elektronischen Einheit, wenn der erste Inhalt ausgegeben wird;
Jahreszeiteninformationen eines Bereichs, in der sich die elektronische Einheit befindet; und Werbungsinformationen, die aus einem Bereich bereitgestellt werden, in dem sich die elektronische Einheit befindet, während der erste Inhalt ausgegeben wird.

5. Elektronische Einheit nach einem der Ansprüche 1 bis 3, wobei der zweite Inhalt mindestens eines aufweist von entweder:
einer Karte von mindestens entweder:
(i) einer Position der elektronischen Einheit, wenn der erste Inhalt ausgegeben wird, oder
(ii) einer Position der elektronischen Einheit, wenn eine Ausgabe des ersten Inhalts angefordert wird, und einem positionsbasierten Inhalt, der mindestens entweder (i) einer Position der elektronischen Einheit, wenn der erste Inhalt ausgegeben wird, oder (ii) einer Position der elektronischen Einheit, wenn eine Ausgabe des ersten Inhalts angefordert wird, zugehörig ist.

6. Elektronische Einheit nach einem der Ansprüche 1, 4 oder 5, wobei der Prozessor ferner konfiguriert ist zum Identifizieren des zweiten Inhalts, wobei das Identifizieren mindestens eines aufweist von entweder einem Ausführen einer Suche eines Speichermoduls nach Inhalt, der mit dem ersten Inhalt übereinstimmt, wobei der Inhalt, der mit dem ersten Inhalt übereinstimmt, ein Inhalt ist, der mindestens einem von entweder Eigenschaftsinformationen, Analyseinformationen und Situationsinformationen zugehörig ist, die jeweils den Eigenschaftsinformationen, Analyseinformationen und/oder Situationsinformationen des ersten Inhalts entsprechen;
und Übertragen, an eine externe Einheit, einer Suchanfrage und Empfangen des zweiten Inhalts von der externen Einheit in Reaktion auf die Suchanfrage, wobei Analyseinformationen Informationen sind, die durch Analysieren des ersten Inhalts generiert wurden; wobei Situationsinformationen eines sind von entweder:
Zeitinformationen zum Ausgeben des ersten Inhalts;
Positionsinformationen oder Bereichsinformationen der elektronischen Einheit, wenn der erste Inhalt ausgegeben wird;
Wetterinformationen, wenn der erste Inhalt ausgegeben wird;
einem Sensorsignal, das ein Sensormodul sammelt, wenn der erste Inhalt ausgegeben wird; Funktionsverwaltungszustands-Information der elektronischen Einheit, wenn der erste Inhalt ausgegeben wird;
Jahreszeiteninformationen eines Bereichs, in der sich die elektronische Einheit befindet; und Werbungsinformationen, die aus einem Bereich bereitgestellt werden, in dem sich die elektronische Einheit befindet, während der erste Inhalt ausgegeben wird.

7. Elektronische Einheit nach Anspruch 6, wobei die Suchanfrage auf mindestens einem beruht von entweder den Eigenschaftsinformationen, die sich auf den ersten Inhalt beziehen, den Analyseinformationen, die durch Analysieren des ersten Inhalts erhalten wurden, oder den Situationsinformationen der elektronischen Einheit.

8. Elektronische Einheit nach einem der Ansprüche 1 bis 7, **dadurch gekennzeichnet, dass**:
der erste Inhalt für mindestens eine angegebene Zeit ausgegebenen wird, nachdem das Ausgabemerkmal erkannt worden ist;
und der zweite Inhalt ausgegeben wird, wenn die angegebene Zeit verstrichen ist.

9. Elektronische Einheit nach Anspruch 1, wobei der Prozessor konfiguriert ist zum Erkennen eines Eingabeereignisses; und zum Ausführen einer Funktion zum Generieren des zweiten Inhalts in Reaktion auf das Eingabeereignis.

10. Verfahren zum Anzeigen von Inhalt auf einer elektronischen Einheit (100) nach Anspruch 1, wobei das Verfahren aufweist:
ein Erkennen, ob ein Ereignis auftritt, das sich auf eine Ausgabe eines ersten Inhalts (710) bezieht, wobei das Ereignis mindestens eines ist von entweder:
einem Ereignis, das sich auf die Ausführung einer Funktion bezieht, die die Ausgabe des ersten Inhalts (710) anfordert;
oder einer Änderung einer Anzeigerichtung des ersten Inhalts (710) von einem vertikalen Zustand in einen horizontalen Zustand oder von einem horizontalen Zustand in einen vertikalen Zustand;
ein Erkennen eines Ausgabemerkmals des ersten Inhalts, wobei das Ausgabemerkmal mindestens eines ist von entweder einer Größe eines Randbereichs, der dem ersten Inhalt zugehörig ist, einer Anzeigegröße des ersten Inhalts, einer Position, an der der erste Inhalt ausgegeben wird, einer Farbe des ersten Inhalts oder einer Anzahl von Objekten, die in dem ersten Inhalt enthalten sind;
ein Prüfen, ob das Ausgabemerkmal des ersten Inhalts eine bestimmte Bedingung erfüllt;
und wenn das Ausgabemerkmal die bestimmte Bedingung erfüllt, Ausgeben des ersten Inhalts (710) und eines zweiten Inhalts (711, 750, 770), wobei der zweite Inhalt entweder ein Inhalt, der auf Grundlage von mindestens einem Teil des ersten Inhalts (710) generiert wurde, ein Inhalt, der unter Verwendung von Suchinformationen gesammelt wurde, die sich auf den ersten Inhalt (710) beziehen, oder ein Inhalt ist, der sich auf eine Ausgabesituation des ersten Inhalts (710) bezieht;
wobei das Prüfen, ob das Ausgabemerkmal des ersten Inhalts die bestimmte Bedingung erfüllt, mindestens eines aufweist von entweder:
einem Erkennen, ob eine Größe eines dem ersten Inhalt zugehörigen Randbereichs eine angegebene Größe überschreitet;
einem Erkennen, ob eine Anzeigegröße des ersten Inhalts kleiner als eine angegebene Ausgabegröße ist;
einem Erkennen, ob der erste Inhalt in einer bestimmten Position angezeigt wird;
einem Erkennen, ob eine Farbe des ersten Inhalts mit einer angegebenen Farbe übereinstimmt; oder
einem Erkennen, ob eine Anzahl von Objekten, die in dem ersten Inhalt enthalten sind, eine angegebene Anzahl ist.

11. Verfahren nach Anspruch 10, aufweisend ein Generieren des zweiten Inhalts, wobei das Generieren des zweiten Inhalts mindestens eines aufweist von entweder:
einem Extrahieren von mindestens einem Abschnitt des ersten Inhalts;
einem Modifizieren von mindestens einem Abschnitt des ersten Inhalts;
einem grafischen Überlagern eines Objekts, das aus dem ersten Inhalt extrahiert wurde, über einen anderen Inhalt, wobei der andere Inhalt ein Inhalt ist, der zusammen in einem Ordner des Arbeitsspeichers gespeichert ist, in dem der erste Inhalt gespeichert ist, oder ein Inhalt, der mit einer Kategorie gespeichert ist, die gemeinsam mit dem ersten Inhalt genutzt wird; einem Vergrößern oder Verkleinern von mindestens einem in dem ersten Inhalt enthaltenen Objekt; und einem Anwenden einer Erweiterung eines Anzeigeverhältnisses auf mindestens einen Abschnitt des ersten Inhalts.

12. Verfahren nach Anspruch 10 oder Anspruch 11, wobei der zweite Inhalt mindestens eines enthält von entweder:
Inhalt, der mit dem ersten Inhalt übereinstimmt, wobei der übereinstimmende Inhalt ein Inhalt ist, der mindestens einem von entweder Eigenschaftsinformationen, Analyseinformationen und Situationsinformationen zugehörig ist, die jeweils den Eigenschaftsinformationen, Analyseinformationen und/oder Situationsinformationen des ersten Inhalts entsprechen;
Inhalt, der mindestens einen Abschnitt des ersten Inhalts enthält;
oder Inhalt, der auf Grundlage von zu der elektronischen Einheit zugehörigen Situationsinformationen erhalten wird,
wobei die Analyseinformationen Informationen sind, die durch Analysieren des ersten Inhalts generiert wurden;
und wobei Situationsinformationen eines sind von entweder: Zeitinformationen zum Ausgeben des ersten Inhalts; Positionsinformationen oder Bereichsinformationen der elektronischen Einheit, wenn der erste Inhalt ausgegeben wird; Wetterinformationen, wenn der erste Inhalt ausgegeben wird; einem Sensorsignal, das ein Sensormodul sammelt, wenn der erste Inhalt ausgegeben wird; Funktionsverwaltungszustands-Information der elektronischen Einheit, wenn der erste Inhalt ausgegeben wird; Jahreszeiteninformationen eines Bereichs, in der sich die elektronische Einheit befindet; und Werbungsinformationen, die aus einem Bereich bereitgestellt werden, in dem sich die elektronische Einheit befindet, während der erste Inhalt ausgegeben wird.

13. Computerprogramm, aufweisend Anweisungen, die, wenn das Programm durch einen Prozessor ausgeführt wird, den Prozessor veranlassen, das Verfahren nach einem der Ansprüche 10 bis 12 auszuführen.

## Revendications

1. Dispositif électronique (100) comprenant :
une mémoire (150) configurée pour stocker un contenu (151) ;
un module d'affichage (140) ; et
un processeur (160) configuré pour :
détecter si un événement relatif à une sortie d'un premier contenu (710) sur le module d'affichage (140) se produit, l'événement étant au moins un des suivants :
un événement relatif à l'exécution d'une fonction requérant la sortie du premier contenu (710) ; ou
un changement dans la direction d'affichage du premier contenu (710) d'une orientation verticale à une orientation horizontale ou d'une orientation horizontale à une orientation verticale ;
le processeur (160) étant configuré en outre pour :
détecter une caractéristique de sortie du premier contenu, la caractéristique de sortie étant au moins une des suivantes : une taille d'une zone marginale du premier contenu, une taille d'affichage du premier contenu, un lieu dans lequel le premier contenu est sorti, une couleur du premier contenu, ou un comptage d'objets compris dans le premier contenu ;
vérifier si la caractéristique de sortie du premier contenu répond à une condition spécifiée ; et
lorsque la caractéristique de sortie répond à la condition spécifiée, sortir sur le module d'affichage (140) le premier contenu (710) et un deuxième contenu (711, 750, 770), le deuxième contenu étant un des suivants : un contenu généré basé sur au moins une partie du premier contenu (710), un contenu collecté en utilisant des informations de recherche se rapportant au premier contenu (710), ou un contenu relatif à une situation de sortie du premier contenu (710), la condition spécifiée étant au moins une des suivantes :
une taille d'une zone marginale associée avec le premier contenu dépassant une taille spécifiée, une taille d'affichage du premier contenu étant inférieure à une taille de sortie spécifiée, un lieu dans lequel le premier contenu est sorti étant limité à un lieu spécifié, une couleur du premier contenu correspondant à une couleur spécifiée, ou un comptage d'objets compris dans le premier contenu étant un nombre spécifié.

2. Dispositif électronique selon la revendication 1, le deuxième contenu étant un contenu généré en fonction d'au moins une partie du premier contenu, le processeur étant configuré en outre pour générer le deuxième contenu, la génération comprenant au moins une des suivantes :
extraction d'au moins une partie du premier contenu ;
modification d'au moins une partie du premier contenu ; ou
superposition graphique d'un objet extrait du premier contenu au-dessus d'un autre contenu, l'autre contenu étant un contenu stocké ensemble dans un dossier de la mémoire (150) au sein duquel est stocké le premier contenu, ou un contenu stocké avec une catégorie commune au premier contenu.

3. Dispositif électronique selon la revendication 1 ou la revendication 2, le processeur étant configuré en outre pour générer le deuxième contenu, la génération comprenant au moins une des suivantes : agrandissement ou réduction du premier contenu, ou application d'une extension d'un rapport d'affichage à au moins une partie du premier contenu.

4. Dispositif électronique selon une quelconque des revendications 1 à 3, le deuxième contenu comprenant au moins un des suivants :
contenu correspondant au premier contenu, le contenu correspondant étant un contenu associé avec au moins une des suivantes : informations sur la propriété, informations d'analyse, et informations sur la situation correspondant aux informations sur la propriété, aux informations sur l'analyse, et/ou aux informations sur la situation du premier contenu respectivement, le contenu comprenant au moins une partie du premier contenu, et un contenu obtenu sur la base d'informations de situation associées au dispositif électronique, les informations de situation étant des informations générées par l'analyse du premier contenu ;
et les informations sur la situation désignant une des suivantes :
informations temporelles pour la sortie du premier contenu ;
informations sur le lieu ou informations sur la région du dispositif électronique lors de la sortie du premier contenu ;
informations météorologiques lors de la sortie du premier contenu ;
signal de détecteur recueilli par un module détecteur lors de la sortie du premier contenu ;
informations sur l'état de gestion des fonctions du dispositif électronique lors de la sortie du premier contenu ;
informations saisonnières d'une région où se trouve le dispositif électronique ; et
informations publicitaires fournies depuis une région où est situé le dispositif électronique lors de la sortie du premier contenu.

5. Dispositif électronique selon une quelconque des revendications 1 à 3, le deuxième contenu comprenant au moins un des suivants :
une carte d'au moins un des suivants :
(i) un lieu du dispositif électronique lors de la sortie du premier contenu, ou
(ii) un lieu du dispositif électronique lorsqu'est requise la sortie du premier contenu, et un contenu géoréférencé associé avec au moins un des suivants : (i) un lieu du dispositif électronique lors de la sortie du premier contenu, ou (ii) un lieu du dispositif électronique lorsqu'est requise la sortie du premier contenu.

6. Dispositif électronique selon une quelconque des revendications 1, 4 ou 5, le processeur étant configuré en outre pour identifier le deuxième contenu, l'identification comprenant au moins une des suivantes : exécution d'une recherche d'un module de stockage pour un contenu correspondant au premier contenu, le contenu correspondant au premier contenu étant un contenu associé avec au moins une des suivantes : informations sur la propriété, informations d'analyse, et informations sur la situation correspondant aux informations sur la propriété, aux informations sur l'analyse, et/ou aux informations sur la situation du premier contenu respectivement ; et
transmission à un dispositif externe d'une requête de recherche, et réception, du dispositif externe, du deuxième contenu du dispositif en réponse à la requête de recherche, les informations d'analyse étant des informations générées par l'analyse du premier contenu, les informations de situation étant une des suivantes :
informations temporelles pour la sortie du premier contenu ;
informations sur le lieu ou informations sur la région du dispositif électronique lors de la sortie du premier contenu ;
informations météorologiques lors de la sortie du premier contenu ;
signal de détecteur recueilli par un module détecteur lors de la sortie du premier contenu ;
informations sur l'état de gestion des fonctions du dispositif électronique lors de la sortie du premier contenu ;
informations saisonnières d'une région où se trouve le dispositif électronique ; et
informations publicitaires fournies depuis une région où est situé le dispositif électronique lors de la sortie du premier contenu.

7. Dispositif électronique selon la revendication 6, la requête de recherche étant basée sur au moins une des suivantes : informations de propriété relatives au premier contenu, informations obtenues en analysant le premier contenu, et informations de situation du dispositif électronique.

8. Dispositif électronique selon une quelconque des revendications 1 à 7, **caractérisé en ce que** :
le premier contenu est sorti pendant au moins un temps spécifié suivant la détection de la caractéristique de sortie ; et
le deuxième contenu est sorti lors de l'écoulement du temps spécifié.

9. Dispositif électronique selon la revendication 1, le processeur étant configuré pour détecter un événement d'entrée, et exécuter une fonction pour la génération du deuxième contenu en réponse à l'événement d'entrée.

10. Méthode d'affichage un contenu sur un dispositif électronique (100) selon la revendication 1, la méthode comprenant :
la détection si un événement relatif à une sortie d'un premier contenu (710) se produit, l'événement étant au moins un des suivants :
un événement relatif à l'exécution d'une fonction requérant la sortie du premier contenu (710) ; ou
un changement dans la direction d'affichage du premier contenu (710) d'une orientation verticale à une orientation horizontale ou d'une orientation horizontale à une orientation verticale ;
la détection d'une caractéristique de sortie du premier contenu, la caractéristique de sortie étant au moins une des suivantes : une taille d'une zone marginale associée avec le premier contenu, une taille d'affichage du premier contenu, un lieu dans lequel le premier contenu est sorti, une couleur du premier contenu, ou un comptage d'objets compris dans le premier contenu ;
la vérification si la caractéristique de sortie du premier contenu répond à une condition spécifiée ; et
lorsque la caractéristique de sortie répond à la condition spécifiée, la sortie du premier contenu (710) et d'un deuxième contenu (711, 750, 770), le deuxième contenu étant un des suivants : un contenu généré basé sur au moins une partie du premier contenu (710), un contenu collecté en utilisant des informations de recherche se rapportant au premier contenu (710), ou un contenu relatif à une situation de sortie du premier contenu (710) ;
le contrôle de la conformité de la caractéristique de sortie du premier contenu à la condition spécifiée comprenant au moins un des suivants :
détecter si une taille de la zone marginale associée avec le premier contenu dépasse une taille spécifiée
détecter si une taille d'affichage du premier contenu est inférieure à une taille de sortie spécifiée ;
détecter si le premier contenu est affiché dans un lieu spécifié ;
détecter si une couleur du premier contenu correspond à une couleur spécifiée ; ou
détecter si un comptage d'objets compris dans le premier contenu est un nombre spécifié.

11. Méthode selon la revendication 10, comprenant la génération du deuxième contenu, la génération du deuxième contenu comprenant au moins une des suivantes :
extraction d'au moins une partie du premier contenu ;
modification d'au moins une partie du premier contenu ;
superposition graphique d'un objet extrait du premier contenu au-dessus d'un autre contenu, l'autre contenu étant un contenu stocké ensemble dans un dossier de la mémoire au sein duquel est stocké le premier contenu, ou un contenu stocké avec une catégorie commune au premier contenu ;
agrandissement ou réduction d'au moins un objet compris dans le premier contenu ; et
application d'une extension d'un rapport d'affichage à au moins une partie du premier contenu.

12. Méthode selon la revendication 10 ou la revendication 11, le deuxième contenu comprenant au moins une des suivants :
contenu correspondant au premier contenu, le contenu correspondant étant un contenu associé avec au moins une des suivantes : informations sur la propriété, informations d'analyse, et informations sur la situation correspondant aux informations sur la propriété, aux informations sur l'analyse, et/ou aux informations sur la situation du premier contenu respectivement ; et
contenu comprenant au moins une partie du premier contenu ; ou
contenu obtenu sur la base d'informations de situation associées au dispositif électronique, les informations d'analyse étant des informations générées en analysant le premier contenu ; et
les informations de situation étant une des suivantes :
informations temporelles pour la sortie du premier contenu ;
informations sur le lieu ou informations sur la région du dispositif électronique lors de la sortie du premier contenu ;
informations météorologiques lors de la sortie du premier contenu ;
un signal de détecteur que recueille un module détecteur lors de la sortie du premier contenu ;
des informations sur l'état de gestion des fonctions du dispositif électronique lors de la sortie du premier contenu ;
des informations saisonnières d'une région où se trouve le dispositif électronique ; et
des informations publicitaires fournies depuis une région où se situe le dispositif électronique lors de la sortie du premier contenu.

13. Programme informatique comprenant des instructions, qui, lors de l'exécution du programme par un processeur, donne lieu à l'exécution, par le processeur, d'une quelconque des revendications 10 à 12.
